# EUROPÄISCHE PATENTSCHRIFT

(11) **EP 2 252 723 B1**
(45) Veröffentlichungstag und Bekanntmachung des Hinweises auf die Patenterteilung: **24.08.2011**
(21) Anmeldenummer: 09783874.2
(22) Anmeldetag: 09.10.2009
(51) Int. Cl.: C23C 22/07, C23C 22/73, C23C 22/77, C23C 22/78

(54) **KONTINUIERLICHES VERFAHREN ZUR OBERFLÄCHENBEHANDLUNG VON METALLBÄNDERN**
CONTINUOUS METHOD FOR TREATING THE SURFACE OF METAL STRIPS
PROCÉDÉ EN CONTINU POUR TRAITER LA SURFACE DE BANDES MÉTALLIQUES

(30) Priorität: 20.10.2008 EP 08167029
(43) Veröffentlichungstag der Anmeldung: 24.11.2010
(73) Patentinhaber: BASF SE, 67056 Ludwigshafen (DE)
(72) Erfinder: VANDERMEULEN, Guido, 68549 Ilvesheim (DE); STRUBEL, Bernd, 68239 Mannheim (DE); WITTELER, Helmut, 67157 Wachenheim (DE); NEUMANN, Jessica, 67063 Ludwigshafen (DE); BERTKAU, Walter, 67069 Ludwigshafen (DE); LAUBUSCH, Bernd, 68642 Bürstadt (DE); HAAS, Jens, 67063 Ludwigshafen (DE); HERRLICH-LOOS, Mirjam, 68165 Mannheim (DE); LÖW, Helmut, 64846 Groß-Zimmern (DE); BRAUMANDL, Walter, 94169 Thurmansbang (DE)
(86) Internationale Anmeldenummer: PCT/EP2009/063140
(87) Internationale Veröffentlichungsnummer: WO 2010/046243

(56) Entgegenhaltungen:
- DE-A1- 19 941 734
- US-A- 3 364 081

## Beschreibung

Die vorliegende Erfindung betrifft ein kontinuierliches Verfahren zur Oberflächenbehandlung von Metallbändern, bei dem man eine Vergütungsschicht mit einer Schichtdicke von weniger als 3 µm auf das Metallband aufbringt, wobei die zum Aufbringen eingesetzte Vorrichtung mit mindestens einem, einer beschichteten Seite des Bandes zugewandten, in Reflexionsgeometrie arbeitenden IR-Sensor ausgestattet ist, welcher zur Messung der Schichtdicke der Vergütungsschicht bei laufendem Band dient.

Die Stahlbänder werden in der Regel mittels geeigneter Maßnahmen vor Korrosion geschützt. Hierbei handelt es sich im Regelfalle um mehrstufige Prozesse. In einem ersten Schritt werden die Stahlbänder üblicherweise mit Zink oder Zinklegierungen beschichtet. Die Wirkung von Zink beruht einerseits darauf, dass es unedler ist als Stahl und deshalb zunächst selbst korrodiert. Die Stahloberfläche bleibt unversehrt, solange sie noch durchgehend mit Zink bedeckt ist. Weiterhin bildet sich in Gegenwart von Luftsauerstoff auf der Oberfläche von Zn oder Zn-Legierungen eine dünne Oxidschicht aus, die den korrosiven Angriff auf das darunter liegende Metall je nach den äußeren Bedingungen mehr oder weniger verlangsamt.

Um die schützende Wirkung einer solchen Oxidschicht zu verstärken, werden die Zn-Oberflächen im Regelfalle einer zusätzlichen Passivierungsbehandlung unterzogen. Im Zuge einer derartigen Behandlung löst sich ein Teil des zu schützenden Metalls auf, und wird zumindest teilweise in einen Film auf der Metalloberfläche eingebaut. Anstelle des Begriffs "Passivierungsschicht" werden auch die Begriffe "Konversionsschicht", "Nachbehandlungsschicht" oder "Vorbehandlungsschicht" synonym verwendet.

Es ist bekannt, eine derartige Passivierung durch Behandlung der verzinkten Stahloberfläche mit sauren Cr(VI) und/oder Cr(III)-Lösungen vorzunehmen. Zunehmend kommen hierzu aber auch chromfreie Formulierungen zum Einsatz, z.B. phosphathaltige Formulierungen oder auch Formulierungen, welche verschiedene Polymere enthalten.

Eine wichtige Klasse von Polymeren, welche in Formulierungen zum Passivieren eingesetzt werden, sind saure wasserlösliche Polymere, wie beispielsweise Polyacrylsäure oder Copolymere von Acrylsäure mit anderen Monomeren, insbesondere anderen sauren Monomeren wie Vinylphosphonsäure, Maleinsäure oder Itaconsäure. Die Verwendung derartiger Polymere zur Passivierung ist beispielsweise in WO 2004/074372, WO 2005/042801, WO 2006/021308, 2006/021309, WO 2006/134116, WO 2006/134117 oder WO 2006/134118 offenbart. Es ist aber auch bekannt, Polymere mit N-haltigen Gruppen einzusetzen, beispielsweise Vinylimidazol umfassende Polymere, wie beispielsweise von WO 2004/81128 offenbart.

Passivierungsschichten sind in aller Regel sehr dünn. Die Trockenschichtdicke von Passivierungsschichten beträgt in der Regel nicht mehr als 3 µm; bei modernen Passivierungsverfahren wird eine Trockenschichtdicke unter 1 µm angestrebt, beispielsweise 0,01 bis 0,4 µm. Zur Qualitätskontrolle und zur Steuerung des Verfahrens muss die Schichtdicke bestimmt werden.

Diese Kontrolle wird in der Regel diskontinuierlich durchgeführt, d. h. aus dem bewegten Metallband wird im laufenden Betrieb eine Probe geschnitten und im Labor nasschemisch oder spektroskopisch untersucht. Dieses Verfahren ist unbefriedigend, da es zeitaufwändig ist und keine hinreichend schnelle Reaktion auf Veränderungen der Bandqualität erlaubt.

Es ist weiterhin bekannt, Röntgenfluoreszenzanalyse zur Überwachung der Oberflächenbehandlung einzusetzen. Hierdurch ist zwar eine Kontrolle möglich, aber die Röntgenfluoreszenzanalyse kann nur zur Bestimmung einiger Leitelemente eingesetzt werden, und kann auch bei diesen nicht zur Bestimmung der Abweichung der chemischen Zusammensetzung bei ansonsten gleicher Leitelementkonzentration dienen. So kann mittels Röntgenfluoreszenzverfahren beispielsweise nicht zwischen der Belegung der Oberfläche mit Chromatverbindungen und der Belegung mit Chrom(III)-Salzen unterschieden werden. Weiter können Röntgenfluoreszenzverfahren nicht zur Bestimmung von dünnen Schichten mit organischen Beschichtungsstoffen wie beispielsweise Ölen und Polymeren verwendet werden, da sie auf diese nicht reagieren. Außerdem funktioniert die Röntgenfluoreszenz-analyse nicht bei laufendem Band, sondern das Band muss zur Messung angehalten werden. Andere klassische Schichtdickenmessverfahren weisen keine hinreichend hohe Empfindlichkeit auf, um Schichtdicken von weniger als 1000 nm quantitativ zu beschreiben.

Es ist bekannt, IR-spektroskopische Verfahren im Zuge der Herstellung von Metallblechen und Metallbändern einzusetzen.

EP 488 726 A2 offenbart ein Verfahren von Blechen aus Silicium-Stahl, bei dem die Oberflächengüte des Silicium-Stahls über die Intensität von Infrarotabsorptionsbanden definiert wird. Es handelt sich aber nicht um ein kontinuierliches Verfahren.

DE 199 41 734 B4 offenbart ein kontinuierliches Verfahren zur Prozessführung beim Beizen von Stahlband. Unter Beizen versteht der Fachmann das Entfernen von Oxiden und anderen Verunreinigungen von metallischen Oberflächen. Dabei wird durch Intensitätsanalyse von reflektierter IR Strahlung eine Bestimmung des Verzunderungsgrads der Metalloberfläche vorgenommen und in Abhängigkeit der Messwerte der Beizprozess gesteuert.

DE 199 41 600 C2 offenbart ein Verfahren zur Prozessführung und Prozessoptimierung beim Warmwalzen von Stahl, bei dem die vom heißen Metall emittierte elektromagnetische Strahlung als Spektrum online erfasst und ausgewertet wird, und wobei kristallographische Umwandlungen des Metalls, die bei bestimmten Temperaturen erfolgen, ausgewertet werden.

Unsere ältere Anmeldung EP 08152645.1 welche als WO 2009/112452 A2 veröfentlich wurde, offenbart ein Verfahren zur kontinuierlichen Kontrolle der Oberfläche von Metallbändern mit dünnen Vergütungsschichten mittels eines Fourier-Transform-IR-Spektrometers. Mit einem Fourier-Transform-IR-Spektrometer kann das gesamte IR-Spektrum der Vergütungsschicht vermessen werden, aber es verfügt über bewegliche Teile, so dass es im Betrieb keinen Erschütterungen ausgesetzt werden darf.

Aufgabe der Erfindung war es, ein verbessertes kontinuierliches Verfahren zur Oberflächenvergütung von Metallbändern, insbesondere zum Passivieren von Metallbändern bereitzustellen, bei dem eine kontinuierliche Qualitätskontrolle bei laufendem Metallband erfolgt, welche unempfindlich im Hinblick auf Vibrationen und Erschütterungen im Betrieb ist.

Dementsprechend wurde ein Verfahren zur kontinuierlichen Oberflächenbehandlung eines Metallbandes mit einer flüssigen Formulierung (F) gefunden, bei dem ein Metallband in Längsrichtung durch eine Vorrichtung zur Oberflächenbehandlung von Metallbändern bewegt wird, welche mindestens eine Vorrichtung (3) zum Auftragen der Formulierung (F) umfasst und man mittels der Vorrichtung (3) die Formulierung (F) auf das Metallband aufträgt, wobei man die Menge der aufzutragenden Formulierung so bemisst, dass sich eine nicht metallische Vergütungsschicht mit einer Schichtdicke von weniger als 3 µm auf der Metalloberfläche bildet, dadurch gekennzeichnet, dass die eingesetzte Vorrichtung -in Laufrichtung des Bandes betrachtet- nach der Vorrichtung (3) mit mindestens einem, einer beschichteten Seite des Bandes zugewandten, in Reflexionsgeometrie arbeitenden IR-Sensor (6) ausgestattet ist, welcher
- mindestens eine breitbandig emittierende IR-Quelle (9), sowie
- mindestens einen, mindestens zwei Messkanäle umfassenden IR-Mehrkanaldetektor (10) umfasst, wobei jeder der Messkanäle mit einem vor dem betreffenden Messkanal angebrachten IR-Filter (11) ausgestattet ist, welcher jeweils nur für einen bestimmten Wellenlängenbereich der IR-Strahlung durchlässig ist, mit der Maßgabe, dass wenigstens zwei unterschiedliche IR-Filter eingesetzt werden,
und wobei die IR-Quelle (9) IR-Strahlung zur beschichteten Bandoberfläche hin abstrahlt, die Strahlung von der Bandoberfläche teilweise reflektiert, die Intensität der reflektierten Strahlung mit dem IR-Mehrkanaldetektor (10) gemessen wird, und man aus der Intensitätsmessung mittels einer Recheneinheit die Schichtdicke der Vergütungsschicht errechnet.

In einer weiteren Ausführungsform der Erfindung wurde ein Verfahren zur kontinuierlichen Oberflächenbehandlung eines Metallbandes mit einer flüssigen Formulierung (F) gefunden, bei dem ein Metallband in Längsrichtung durch eine Vorrichtung zur Oberflächenbehandlung von Metallbändern bewegt wird, welche mindestens
- eine Vorrichtung (3) zum Auftragen der Formulierung (F) und
- eine Trockenstation (5) umfasst,
und wobei die Formulierung (F) mindestens ein Lösemittel sowie beschichtungsbildende Komponenten umfasst, man mittels der Vorrichtung (3) die Formulierung (F) auf das Metallband aufträgt, mittels der Trockenstation die Lösemittel zumindest teilweise entfernt, und wobei man die Menge der aufzutragenden Formulierung so bemisst, dass sich eine nicht metallische Vergütungsschicht mit einer Trockenschichtdicke von weniger als 3 µm auf der Metalloberfläche bildet, und wobei weiterhin die eingesetzte Vorrichtung -in Laufrichtung des Bandes betrachtet- nach der Trockenstation (5) mit mindestens einem, einer beschichteten Seite des Bandes zugewandten, in Reflexionsgeometrie arbeitenden IR-Sensor (6) ausgestattet ist, welcher
- mindestens eine breitbandig emittierende IR-Quelle (9), sowie
- mindestens einen, mindestens zwei Messkanäle umfassenden IR-Mehrkanaldetektor (10) umfasst, wobei jeder der Messkanäle mit einem vor dem betreffenden Messkanal angebrachten IR-Filter (11) ausgestattet ist, welcher jeweils nur für einen bestimmten Wellenlängenbereich der IR-Strahlung durchlässig ist, mit der Maßgabe, dass wenigstens zwei unterschiedliche IR-Filter eingesetzt werden,
und wobei die IR-Quelle (9) IR-Strahlung zur beschichteten Bandoberfläche hin abstrahlt, die Strahlung von der Bandoberfläche teilweise reflektiert, die Intensität der reflektierten Strahlung mit dem IR-Mehrkanaldetektor (10) gemessen wird, und man aus der Intensitätsmessung mittels einer Recheneinheit die Schichtdicke der Vergütungsschicht errechnet.

In einer bevorzugten Ausführungsform der Erfindung handelt es sich bei der Oberflächenbehandlung um eine Passivierung. Besonders bevorzugt handelt es sich um eine saure Passivierung, bei der man mindestens ein saure Gruppen umfassendes Polymer einsetzt.

Verzeichnis der Abbildungen:
- Abb. 1:: Schematische Darstellung wesentlicher Elemente des erfindungsgemäßen Verfahrens, einseitiger Auftrag
- Abb. 2:: Schematische Darstellung wesentlicher Elemente des erfindungsgemäßen Verfahrens, einseitiger Auftrag, andere Auftragungsart
- Abb. 3:: Schematische Darstellung wesentlicher Elemente des erfindungsgemäßen Verfahrens, beidseitiger Auftrag
- Abb. 4:: Schematische Darstellung wesentlicher Elemente des erfindungsgemäßen Verfahrens, einseitiger Auftrag, andere Auftragungsart, mit zusätzlicher Stützrolle
- Abb. 5:: Schematische Darstellung wesentlicher Elemente des erfindungsgemäßen Verfahrens, beidseitiger Auftrag, mit zusätzlicher Stützrolle
- Abb. 6:: Schematische Darstellung der Unterseite eines IR-Sensors (6) mit 8 IR-Quellen (Abb. 6a) und mit 4 IR-Quellen (Abb. 6b).
- Abb. 7:: Schematische Darstellung des Messvorganges mit dem IR-Sensor (6)

Zu der Erfindung ist im Einzelnen das Folgende auszuführen:
Bei dem erfindungsgemäßen Verfahren zur kontinuierlichen Oberflächenbehandlung von Metallbändern wird auf die Oberfläche eines Metallbandes eine flüssige Formulierung (F), welche mindestens ein Lösemittel sowie beschichtungsbildende Komponenten umfasst aufgebracht. Hierbei wird eine nicht metallische Vergütungsschicht auf der Metalloberfläche erhalten, welche eine Trockenschichtdicke von weniger als 3 µm aufweist.

Der Begriff "Vergütungsschicht" soll alle Arten von dünnen nicht metallischen Schichten der genannten Dicke umfassen, mit welchen die Oberfläche von Metallbändern durch Behandlung mit geeigneten Formulierungen versehen werden kann, um deren Eigenschaften zu verändern, insbesondere im Hinblick auf nachfolgende Verarbeitungsschritte, wie z.B. dem Aufbringen von Lackschichten oder das Umformen der Bänder bzw. Stücken davon. Der Begriff "nicht metallisch" soll selbstverständlich nicht ausschließen, dass eine Vergütungsschicht Metallionen oder Metallverbindungen, beispielsweise Metalloxide enthalten kann, hiermit soll nur eine Abgrenzung zur Beschichtung des Bandes mit Metallen bzw. Metalllegierungen selbst, wie beispielsweise dem Schritt der Verzinkung des Bandes erfolgen. Bevorzugt umfassen Vergütungsschichten mindestens eine organische Komponente. Kennzeichnend für Vergütungsschichten ist es, dass sie unmittelbar auf die Metalloberfläche aufgebracht werden.

Beispiele für nicht metallische Vergütungsschichten umfassen temporäre oder permanente Korrosionsschutzschichten, insbesondere Passivierungsschichten, Haftschichten, Ölschichten oder Wachsschichten, welche beispielsweise zur Verbesserung der Umformbarkeit aufgebracht werden können, Phosphatierungen, Chromatierungen, Konversionsschichten oder auch reaktive Beschichtungen, bei denen Kationen aus dem Metall gelöst und zum Bestandteil der Schicht werden. Bevorzugt sind Vergütungsschichten, welche organische Komponenten umfassen.

Bevorzugt handelt es sich bei dem erfindungsgemäßen Verfahren um eine Passivierung, und bei der Vergütungsschicht handelt es sich dementsprechend um eine Passivierungsschicht.

Bei den für das Verfahren eingesetzten Metallbändern kann es sich prinzipiell um alle Arten von Metallbändern handeln. Je nach dem vorgesehenen Verwendungszweck können die eingesetzten Metallbänder eine Dicke von 0,05 mm bis 5 mm, bevorzugt 0,3 bis 3 mm, eine Breite von 0,5 bis 2,5 m sowie eine Länge von mehreren hundert Metern aufweisen. Bevorzugt handelt es sich um Bänder aus Stahl, Eisen, Zink, Zinn, Aluminium, Kupfer oder Legierungen davon, wobei die Bänder auch noch eine metallische Beschichtung aufweisen können, beispielsweise aus Zinn, Zink, Aluminium, Nickel, bevorzugt Zink, Aluminium oder Legierungen davon.

In einer bevorzugten Ausführungsform der Erfindung handelt es sich um bei dem eingesetzten Metallband um ein Stahlband, besonders bevorzugt um ein verzinktes Stahlband. Es kann sich hierbei um feuerverzinkte oder um elektrolytisch verzinkte Stahlbänder handeln. Verzinkte Stahlbänder sind für verschiedenste Anwendungen kommerziell erhältlich. Der Fachmann wählt je nach dem gewünschten Verwendungszweck ein geeignetes Stahlband aus.

Der Begriff "verzinkt" umfasst selbstverständlich auch Beschichtungen mit Zn-Legierungen. Zn-Legierungen zum Beschichten von Stahl sind dem Fachmann bekannt. Je nach dem gewünschten Anwendungszweck wählt der Fachmann Art und Menge von Legierungsbestandteilen aus. Typische Bestandteile von Zink-Legierungen umfassen insbesondere Al, Mg, Pb, Si, Mg, Sn, Cu oder Cd, bevorzugt Al oder Mg. Es kann sich auch um Al-Zn-Legierungen handeln, bei denen Al- und Zn in annähernd gleicher Menge vorhanden sind. Bei den Beschichtungen kann es sich um weitgehend homogene Beschichtungen oder auch um Konzentrationsgradienten aufweisende Beschichtungen handeln. Weiterhin bevorzugt kann es sich um Zn-Mg-Legierungen handelt. Hierbei kann es sich um mit einer Zn-Mg-Legierung beschichteten Stahl handeln, bspw. feuerverzinkten Stahl, oder es kann sich um verzinkten Stahl handeln, der zusätzlich mit Mg bedampft wurde. Hierdurch kann oberflächlich eine Zn/Mg-Legierung entstehen.

Die Bänder können einseitig oder beidseitig verzinkt sein. Bei beidseitig verzinkten Bändern können mittels des erfindungsgemäßen Verfahrens beide Seiten oder auch nur eine Seite behandelt werden.

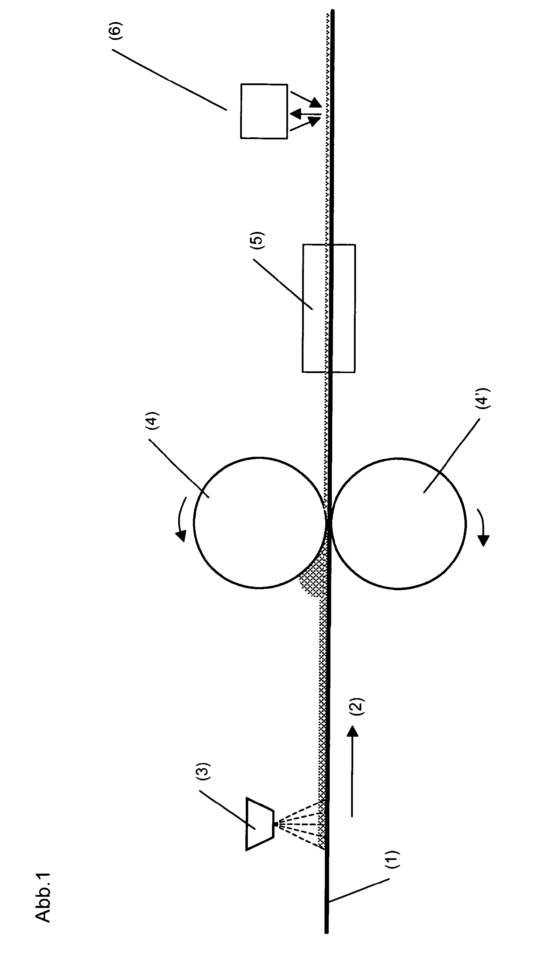

Zur Ausführung des erfindungsgemäßen Verfahrens wird eine Bandbeschichtungsanlage verwendet. Die Abbildungen 1 bis 3 zeigen schematisch verschiedene Ausführungsformen der wesentlichen Komponenten der Bandbeschichtungsanlage. Nicht dargestellt sind die Vorrichtungen zum Abwickeln des rohen Stahlbandes von der Rolle, die Vorrichtung zum Aufwickeln des beschichteten Bandes sowie die Antriebsvorrichtung für das Band. Die Bandbeschichtungsanlage kann darüber hinaus selbstverständlich optional noch weitere übliche Bestandteile, wie beispielsweise eine Dressierstation oder Reinigungsstationen umfassen. Weiterhin kann die Bandbeschichtungsanlage beispielsweise Teil einer ganzen Fertigungsstraße sein, bei der man zunächst ein Metallband verzinkt, anschließend mittels des erfindungsgemäßen Verfahrens mit einer Vergütungsschicht versieht und gegebenenfalls anschließend lackiert. Die Metallbänder können beispielsweise mit einer Geschwindigkeit von 20 bis 300 m/s, bevorzugt 50 bis 150 m/s durch die Anlage gefahren werden.

Zur Ausführung des erfindungsgemäßen Verfahrens wird auf das Metallband (1), welches sich in Laufrichtung (2) bewegt, mittels einer Vorrichtung (3) eine Formulierung (F) aufgetragen. Die Formulierung kann beispielsweise mittels einer Sprühvorrichtung (Nr. (3) in Abb. 1) auf das Band gesprüht werden. Sie kann selbstverständlich auch auf eine Auftragswalze oder eine Kombination mehrerer Walzen aufgebracht werden, welche ihrerseits die Formulierung auf das Band übertragen. Das Auftragen auf eine Auftragswalze kann beispielsweise mittels Sprühen, Tauchen oder Gießen erfolgen.

In aller Regel umfasst die Anlage darüber hinaus eine Vorrichtung zum Abtrennen überschüssiger Formulierung und/oder zum Glätten der Beschichtung auf dem Metallband.

Hierbei kann es sich beispielsweise um eine Rakelvorrichtung, beispielsweise ein Rakelmesser handeln. In einer bevorzugten Ausführungsform handelt es sich hierbei um zwei einander gegenüber angeordnete Walzen (4) und (4'). Zwischen den beiden Walzen (4), (4') verbleibt ein Spalt, welcher in seiner Breite verstellbar ist. Hierzu können eine oder auch beide Walzen mit einer entsprechenden Mechanik zur Verstellung der Walzenposition versehen sein. Zur Ausführung des Verfahrens wird das Metallband in seiner Längsrichtung durch den verstellbaren Spalt zwischen den Walzen (4), (4') hindurch bewegt. Die Walzen drehen sich hierbei in der Laufrichtung (2) des Stahlbandes.

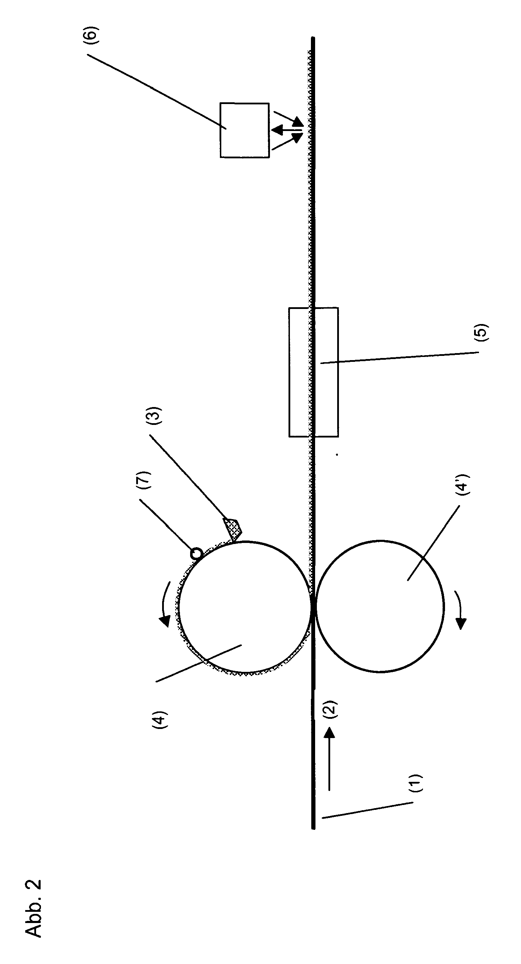

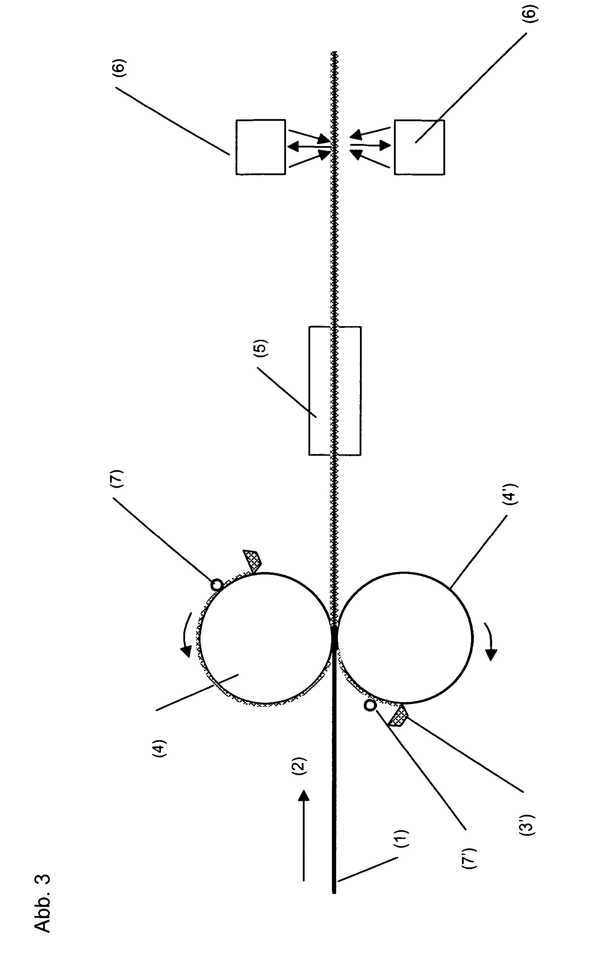

Das Auftragen der Formulierung (F) auf das Metallband kann auch indirekt erfolgen, indem man die Formulierung mit einer Auftragsvorrichtung (3) zunächst auf eine der Walzen (4) oder auf beide Walzen (4), (4') aufträgt und von den Walzen auf das Metallband überträgt. Optional kann überschüssige Formulierung von den Walzen (4), (4') mittels ein geeigneter Rakelvorrichtungen (7) bzw. (7') entfernt werden. Diese Ausführungsform ist beispielhaft in den Abbildungen 2 und 3 dargestellt. Möglich sind selbstverständlich auch noch andere Ausführungsformen der Auftragsvorrichtung (3), beispielsweise solche, welche über eine Kombination mehrerer Rollen verfügen.

Weiterhin kann die Anlage -je nach der Art der aufzubringenden Formulierung- eine Trockenvorrichtung umfassen, mit der in der Formulierung (F) gegebenenfalls enthaltenes Lösemittel ganz oder teilweise entfernt werden kann. Eine Trockenvorrichtung (5) wird in Laufrichtung (2) des Bandes hinter der Auftragsvorrichtung (3) oder -sofern vorhanden- hinter der Vorrichtung (4) angeordneten Trockenvorrichtung (5) angeordnet. Über den Abstand zwischen der Auftragsvorrichtung (3) und der Trockenvorrichtung (5) unter Berücksichtigung der Bandgeschwindigkeit bestimmt sich die Einwirkzeit der Formulierung auf die Metalloberfläche.

Bei der Trockenvorrichtung (5) kann es sich beispielsweise um einen Umlufttrockner oder um einen IR-Trockner handeln. Die Trockentemperatur wird vom Fachmann je nach der verwendeten Formulierung (F) und den gewünschten Eigenschaften der Schicht eingestellt. Bewährt hat sich eine Temperatur von 25 bis 95°C und bevorzugt 30 bis 80°C, jeweils gemessen als "Peak-Metal-Temperatur". Die Temperatur der Umluft in einem Umlufttrockner kann dabei selbstverständlich auch höher sein.

Nach dem Passieren der Trockenvorrichtung (5) verbleibt eine getrocknete Vergütungsschicht auf dem Metallband, wobei der Begriff "getrocknet" selbstverständlich nicht ausschließt, dass noch geringe Mengen, insbesondere Spuren des Lösungsmittels in der Schicht vorhanden sein können.

Erfindungsgemäß weist die nicht metallische Vergütungsschicht auf der Metalloberfläche eine Schichtdicke von weniger als 3 µm auf, bevorzugt weniger als 2 µm auf. Insbesondere handelt es sich um Schichten, welche eine Schichtdicke von 1 nm bis 1000 nm, bevorzugt 5 nm bis 500 nm und besonders bevorzugt 10 nm bis 300 nm aufweisen. Bei Schichten, welche getrocknet werden, bezieht sich diese Angabe auf die Trockenschichtdicke.

Die Schichtdicke kann vom Fachmann mittels prinzipiell bekannter Maßnahmen gesteuert werden, beispielsweise über die aufgetragene Menge der Formulierung (F) sowie deren Konzentration. Weitere Regelungsmöglichkeiten bestehen in der geeigneten Einstellung der Vorrichtung (4), beispielsweise den Abstand der Walzen zueinander, falls es sich bei (4) um ein Walzenpaar (4), (4') handelt, oder den Abstand eines Rakelmessers von der Oberfläche des Bandmetalls, falls es sich bei (4) um ein Rakelmesser handelt. Die gewählte Schichtdicke richtet sich jeweils nach den gewünschten Eigenschaften der Schicht.

Erfindungsgemäß umfasst die eingesetzte Vorrichtung -in Laufrichtung des Bandes betrachtet- hinter der Auftragsvorrichtung (3) bzw. -sofern vorhanden- einer Glättvorrichtung (4) oder einer Trockenstation (5) mindestens einen IR-Sensor (6). Der IR-Sensor arbeitet in Reflexionsgeometrie und ist einer beschichteten Seite des Bandes zugewandt. Eine mögliche Anordnung zeigt Abbildung 2. Mittels des IR-Sensors kann kontinuierlich, d.h. bei laufendem Band, die Dicke der aufgebrachten Vergütungsschicht, beispielsweise einer aufgebrachten Passivierungsschicht oder einer aufgebrachten Ölschicht detektiert werden.

Die Vorrichtung kann auch mit zwei oder mehreren IR-Sensoren ausgestattet sein. Wenn sowohl die Ober- als auch die Unterseite des Bandes (1) beschichtet wird, können Sensoren auf der Oberseite wie auf der Unterseite des Bandes angeordnet werden. Dies ist in Abbildung 3 beispielhaft dargestellt. Es ist selbstverständlich auch möglich, jeweils mehrere IR-Sensoren pro Seite einzusetzen, beispielsweise mehrere IR-Sensoren über die Breite des Metallbandes verteilt. So können beispielsweise 3 IR-Sensoren über die Breite des Bandes verteilt werden, und somit Unterschiede der Dicke der Beschichtung in verschiedenen Bereichen des Bandes detektiert werden.

Die eingesetzten IR-Sensoren (6) umfassen mindestens eine breitbandig emittierende IR-Quelle (9) sowie mindestens einen, mindestens zwei Messkanäle umfassenden IR-Mehrkanaldetektor (10).

Unter breitbandig emittierenden IR-Quellen sind alle IR-Strahlungsquellen zu verstehen, welche das gesamte IR-Spektrum oder zumindest einen Teilbereich davon, insbesondere den Bereich des mittleren Infrarot (MIR, 4000 cm⁻¹ - 200 cm⁻¹) abstrahlen. Bevorzugt können IR-Stahlungsquellen eingesetzt werden, welche das Emissionsspektrum eines schwarzen Körpers ausstrahlen. Laser, welche nur definierte Wellenlängen abstrahlen, sind zur Ausführung der Erfindung nicht geeignet. Prinzipiell können übliche IR-Lampen eingesetzt werden, bevorzugt werden aber Strahler eingesetzt, welche dünne thermoresitive Filme, z.B. einen Film aus amorphem Kohlenstoff auf einem geeigneten Träger als Erzeuger der IR-Strahlung verwenden. Derartige IR-Strahler sind kommerziell erhältlich und sie sind weniger empfindlich gegen Erschütterungen als IR-Lampen mit Glühdrähten.

Der erfindungsgemäß verwendete IR-Sensor (6) weist in der Regel 1 bis 16 IR-Quellen auf, besonders bewährt haben sich Sensoren mit 4 bis 8 IR-Quellen. Die Anzahl der IR-Quellen bestimmt einerseits die Intensität der Strahlung, und andererseits führt eine größere Anzahl von Strahlungsquellen auch zu einer gleichmäßigeren Bestrahlung der Bandoberfläche und in der Folge davon zu qualitativ besseren Messergebnissen.

Bei dem Mehrkanaldetektor (10) sind mehrere IR-Detektoren zu einer kompakten Messeinheit zusammengefasst, so dass ein auf den Detektor fallender IR-Strahl mittels mehrerer Messkanäle analysiert werden kann. Der Mehrkanaldetektor umfasst mindestens zwei Messkanäle, bevorzugt 2 bis 6 Kanäle und besonders bevorzugt 2 bis 4 und ganz besonders bevorzugt 2 oder 4 Kanäle.

Jeder der Messkanäle ist mit einem vor dem betreffenden Messkanal angebrachten IR-Filter (11) ausgestattet. Die Filter sind jeweils nur für einen bestimmten IR-Wellenlängenbereich durchlässig. Im Regelfalle beträgt die Halbwertsbreite des IR-durchlässigen Bereiches 50 bis 250 nm. Derartige Filter, welche nur für einen relativ engen Bereich des IR-Spektrums durchlässig sind ("Narrow band pass filters") können auf Basis von Silicium oder Germanium-Substraten gefertigt werden und sind für verschiedenste Wellenlängenbereiche kommerziell erhältlich. Erfindungsgemäß umfasst der Detektor zumindest zwei unterschiedliche IR-Filter, und bevorzugt ist jeder der Messkanäle mit einem anderen Filter ausgestattet.

Für die vorliegende Anwendung hat es sich bewährt, im Bereich von 2000 bis 5000 cm⁻¹, bevorzugt 2500 bis 4000 cm⁻¹ zu messen. Die IR-Filter werden vom Fachmann dementsprechend so gewählt, dass die einzelnen Messkanäle verschiedene Teilbereiche aus dem genannten Gesamtbereich herausgreifen.

Die IR-Quellen (9) und der Mehrkanaldetektor (10) werden im Sensor (6) räumlich so angeordnet, dass die IR-Quelle(n) (9) IR-Strahlung zur beschichteten Bandoberfläche hin abstrahlen, welche von der Bandoberfläche -je nach der Art der IR-Absorption der Vergütungsschicht- teilweise reflektiert wird und die reflektierte Strahlung von dem IR-Mehrkanaldetektor (10) gemessen wird.

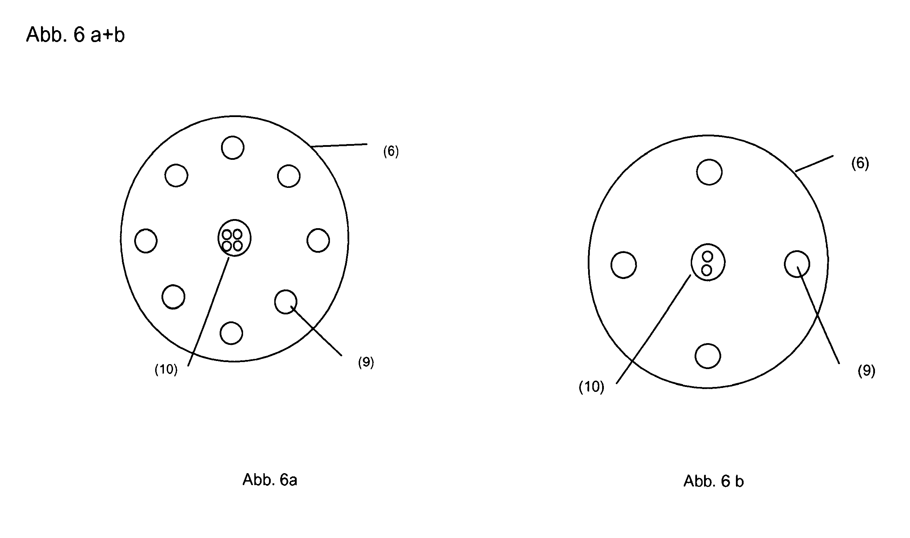

Abb. 6 zeigt schematisch eine Sicht auf die Unterseite einer bevorzugten Ausführungsform des IR-Sensors (6). Der Mehrkanaldetektor (10) ist zentral angeordnet, und die IR-Quellen (9) umgeben den Mehrkanaldetektor (10) konzentrisch. 6 a zeigt eine Anordnung mit 8 IR-Quellen und einem 4-Kanaldetektor; Abb. 6b eine Anordnung mit 4 IR-Quellen und einem 2-Kanaldetektor.

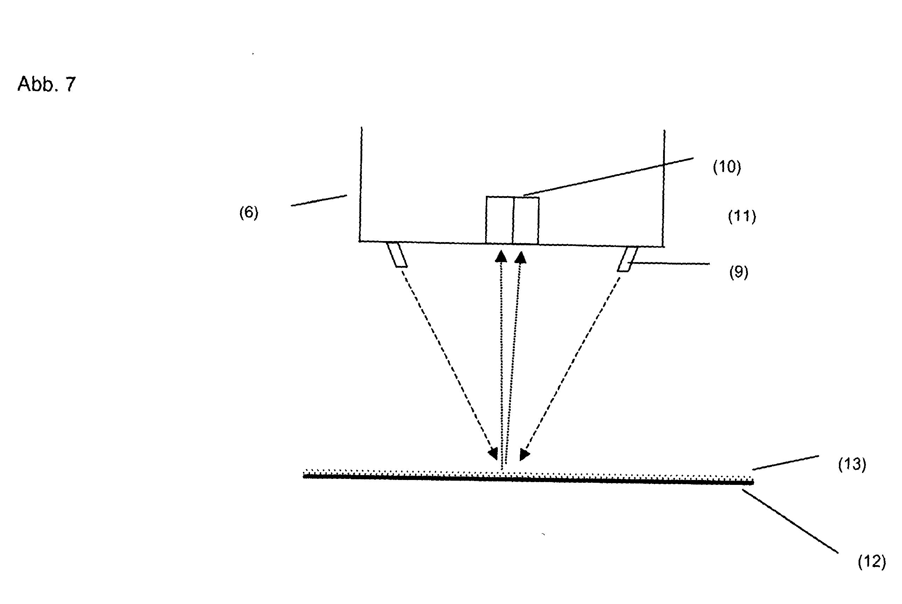

Abb.7 zeigt schematisch eine Messung mit dem Detektor. Die IR-Quellen (9) sind leicht gegeneinander geneigt und senden IR-Strahlung zum mit einer Vergütungsschicht (13) versehenen Metallband (12), und zwar derart, dass die einzelnen IR-Strahler auf der Bandoberfläche einen möglichst homogenen Messfleck bilden. Die Strahlung wird von dort zum Mehrkanaldetektor (10) reflektiert, wobei in Abb. 7 ein Zweikanaldetektor mit zwei unterschiedlichen IR-Filtern (11) dargestellt ist.

Der beschriebene IR-Sensor (6) weist im Gegensatz zu einem IR-Spektrometer keine beweglichen Teile auf und ist dem entsprechend sehr unempfindlich gegenüber Schwingungen.

Die Justierung der IR-Quellen (9) sollte hierbei so erfolgen, dass der Messfleck auf der mit der Vergütungsschicht beschichteten Metalloberfläche im Regelfalle einen Durchmesser von einigen Millimetern, beispielsweise 5 bis 30 mm aufweist.

Der Abstand des IR-Sensors vom Metallband sollte nicht zu gering sein, damit der Detektor nicht durch eventuelle Flatterbewegungen oder Schweißnähte des Bandes beschädigt wird. Bewährt hat sich ein Abstand vom Austritt der Strahlung aus dem IR-Sensor bis zur Metalloberfläche von 20 bis 250 mm, bevorzugt 25 bis 200 mm, besonders bevorzugt 30 bis 180 mm und ganz besonders bevorzugt 30 bis 120 mm. Je größer der Abstand des IR-Sensors (6) von der Bandoberfläche, desto größer sollte auch die Zahl der IR-Quellen (9) sein.

Aus der Messung der Intensität der reflektierten Strahlung mit dem IR-Mehrkanaldetektor kann man mittels einer Recheneinheit die Schichtdicke der Vergütungsschicht bestimmen. Bevorzugt kann es sich hierbei um eine sensorinterne Recheneinheit handeln, es kann sich aber auch um eine separate Recheneinheit handeln. Werden mehrere IR-Sensoren (9) zur gleichzeitigen Schichtdickenbestimmung an mehreren Punkten auf einem Band eingesetzt, so können die einzelnen Schichtdicken von den jeweiligen Sensoren an eine zentrale Steuereinheit, bzw. von den einzelnen Sensoren an eine Konzentratoreinheit und von dieser an eine zentrale Steuereinheit übermittelt werden.

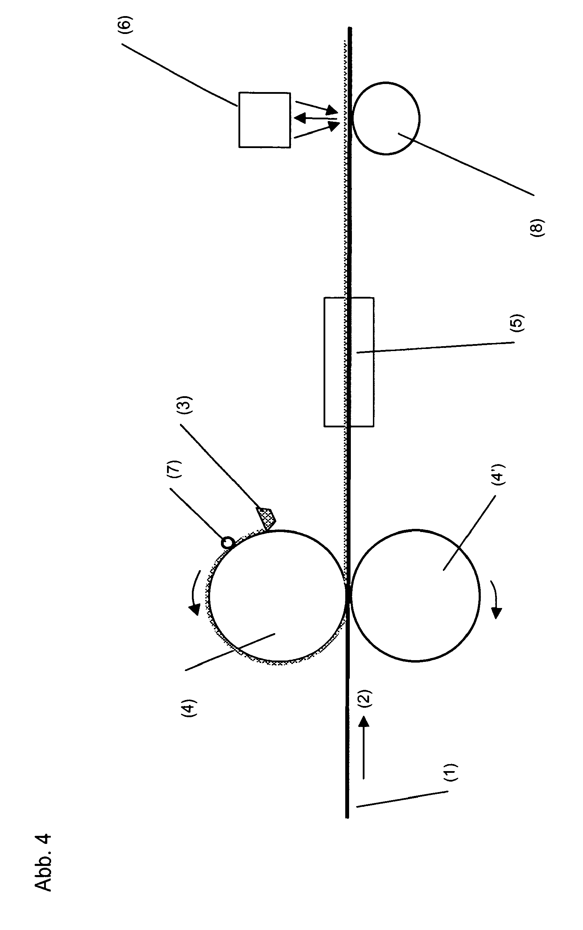

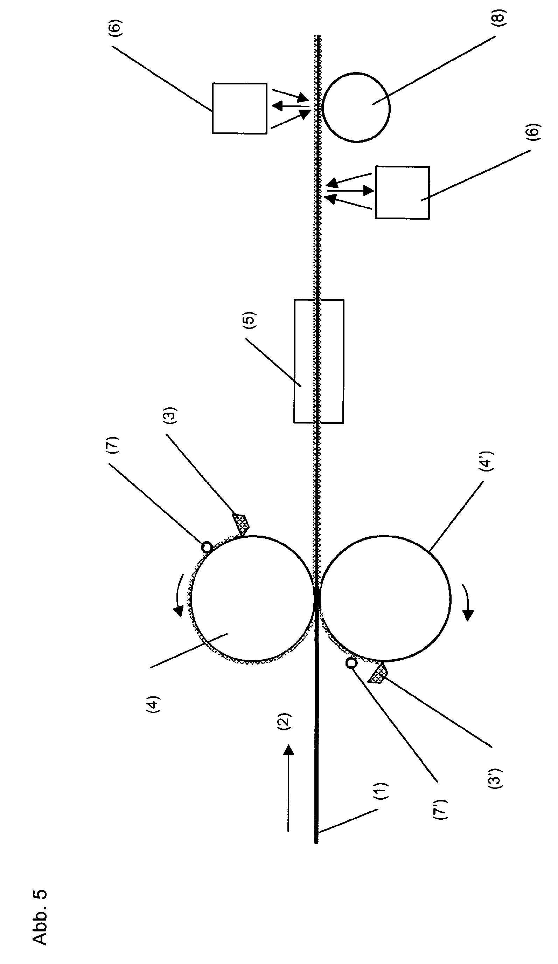

In einer weiterhin bevorzugten Ausführungsform ist das Metallband an der oder in der Nähe der Stelle der IR-Messung mit mindestens einer zusätzlichen Stützrolle bzw. Umlenkrolle (8) unterstützt. Metallbänder in einer Bandbeschichtungsanlage können Flatterbewegungen ausführen, welche die IR-Messung stören könnten. Durch eine Stütz- bzw. Umlenkrolle (8) können derartige Flatterbewegungen unterdrückt oder zumindest abgeschwächt werden. Mit dem Begriff "Stützrolle" soll eine, ein geradlinig, insbesondere waagerecht laufendes Metallband unterstützende Rolle gemeint sein, ohne dass die Rolle die Laufrichtung des Bandes verändert. Mit einer Umlenkrolle hingegen wird gleichzeitig die Laufrichtung des Bandes mehr oder weniger stark verändert. Diese Ausführungsform der Erfindung ist in den Abbildungen 4 und 5 beispielhaft dargestellt. Die Stütz- bzw. Umlenkrolle (8) befindet sich auf der von der IR-Messung abgewandten Seite des Metallbandes, beispielsweise direkt unterhalb der IR-Messung. Eine solche Anordnung ist aber nicht zwingend, es ist ausreichend, dass die Rolle in einer solchen Nähe zur IR-Messung angeordnet ist, dass sie wirksam Flatterbewegungen unterdrücken oder zumindest abschwächen kann. Im Allgemeinen gilt, dass umso bessere Ergebnisse erzielt werden je geringer der Abstand ist. Im Regelfalle sollte der Abstand der Stütz- bzw. Umlenkrolle (8) zur Messstelle nicht mehr als 4 m, bevorzugt nicht mehr als 1 m betragen.

Mittels der beschriebenen Messvorrichtung lässt sich bei laufendem Metallband die Dicke der aufgebrachten Beschichtung ermitteln. Je dicker die aufgebrachte Vergütungsschicht, desto mehr absorbiert die Schicht und desto geringer ist dementsprechend der Anteil der reflektierten IR-Strahlung, welche vom IR-Sensor wieder registriert wird.

### Formulierungen (F)

Bei den eingesetzten flüssigen Formulierungen (F) kann es sich um alle Arten von Formulierungen handeln, mit welchen Vergütungsschichten auf Metallbänder aufgebracht werden können.

Beispielsweise kann es sich um Formulierungen von Korrosionsschutz-, Walz- und/oder Umformölen handeln. Derartige Öle können übliche Additive und/oder Hilfsstoffe enthalten, beispielsweise Korrosionsinhibitoren.

Bevorzugt werden flüssige Formulierungen (F) eingesetzt, welche mindestens ein Lösemittel sowie beschichtungsbildende Komponenten umfassen. Bevorzugt handelt es sich um wässrige Formulierungen.

Als Lösemittel umfassen die bevorzugten Formulierungen (F) bevorzugt nur Wasser. Sie kann daneben noch mit Wasser mischbare organische Lösemittel in geringen Mengen umfassen. Beispiele umfassen Monoalkohole wie Methanol, Ethanol oder Propanol, höhere Alkohole wie Ethylenglykol oder Polyetherpölyole, Etheralkohole wie Butylglykol oder Methoxy-propanol und N-Methylpyrrolidon. Im Regelfalle beträgt die Menge des Wassers aber mindestens 80 Gew. %, bevorzugt mindestens 90 Gew. % und ganz besonders bevorzugt mindestens 95 Gew. %. Die Angaben beziehen sich jeweils auf die Gesamtmenge aller Lösemittel.

Bei den beschichtungsbildenden Komponenten kann es sich beispielsweise um gelöste Metallionen oder Metallverbindungen handeln, welche beispielsweise auf der Oberfläche in Form von Oxiden und/oder Hydroxiden abgeschieden werden, insbesondere um Verbindungen der Elemente Zn, Mg, Al, Cr, Ni, Co, Mo, Mn, W, Si, Zr oder Ti. Bei den beschichtungsbildenden Komponenten kann es sich weiterhin um organische Komponenten handeln. Beispiele organischer Komponenten umfassen Wachse oder Öle sowie insbesondere wasserlösliche oder zumindest wasserdispergierbare Polymere.

In einer bevorzugten Ausführungsform der Erfindung umfasst die Formulierung (F) mindestens eine Komponente ausgewählt aus der nachfolgenden Gruppe von Komponenten:
- 1.: Hexafluorometallate [MF₆]²⁻ wobei M = Ti, Si, Zr.
- 2.: Oxometallate des Aluminiums, Molybdäns, Chroms, Wolframs und Mangans.
- 3.: Salze umfassend die Kationen von Ca, Mg, Zn, Ni, Fe, Ni, Cr.
- 4.: Salze umfassend die Anionen NO₃⁻, NO₂⁻, PO₄³⁻, HPO₄²⁻, H₂PO₄⁻, SO₄²⁻, SO₃⁻, CO₃²⁻, HCO₃⁻ oder CH₃COO⁻.
- 5.: Walz- und Korrosionsschutzöle.
- 6.: Wachse.
- 7.: organische Filmbildner.
- 8.: Polymere und Copolymere, erhältlich aus mindestens einer der nachfolgenden Komponenten

- •: C₃-, C₄- oder C₅-Carbonsäuren mit ein oder zwei Doppelbindungen, ins- besondere Acrylsäure,
- •: Acrylsäureestern,
- •: ungesättigten Sulfonsäuren, Phosphonsäuren, Phosphonsäureestem,
- •: Vinylpyrrolidon, Vinylimidazol, Vinylacetat, Acrylamid und N-substi- tuierten Derivate des Acrylamids,
- •: Ethylenimin.

Bei den Formulierungen (F) kann es sich beispielsweise um wässrige Metallbearbeitungsflüssigkeiten mit einem pH > 7 handeln, welche neben Wasser mindestens Öle und/oder Wachse sowie Korrosionsinhibitoren umfassen. Derartige Formulierungen dienen beispielsweise der Herabsetzung der Reibungskoeffizienten beim Verformen.

In einer bevorzugten Ausführungsform der Erfindung handelt es sich bei der Oberflächenbehandlung um eine Passivierung, bevorzugt um die Passivierung von verzinkten Stahlbändern. Formulierungen zum Passivieren sind dem Fachmann prinzipiell bekannt.

In einer Ausführungsform der Erfindung kann es sich um eine Phosphatpassivierung handeln, bei der man eine wässrige Formulierung (F) mit einem pH-Wert ≤ 5 einsetzt, wobei die Formulierung neben Wasser mindestens Phosphorsäure und/oder Phosphat sowie mindestens ein Metallion umfasst. Bei den Metallionen kann es sich bevorzugt um mindestens Metallion, ausgewählt aus der Gruppe von Cr³⁺, Zn²⁺, Mg²⁺, Ca²⁺ oder Al³⁺, bevorzugt Cr³⁺, Zn²⁺, Mg²⁺, Ca²⁺ oder Al³⁺ handeln.

In einer bevorzugten Ausführungsform der Erfindung setzt man zum Passivieren eine wässrige, saure Formulierung (F) mit einem pH-Wert ≤ 5 ein, welche mindestens ein wasserlösliches oder wasserdispergierbares Polymer umfasst. Bevorzugt werden wasserlösliche Polymere eingesetzt.

Der saure pH-Wert kann zustande kommen, weil das Polymer selbst saure Gruppen in ausreichender Menge aufweist, oder aber die eingesetzte Formulierung (F) kann neben den wasserlöslichen oder wasserdispergierbaren Polymeren noch anorganische oder organische Säuren oder Mischungen davon enthalten. Die Auswahl derartiger Säure ist nicht begrenzt, vorausgesetzt, es treten keine negativen Effekte zusammen mit den anderen Komponenten der Formulierung auf. Der Fachmann trifft eine entsprechende Auswahl. Beispiele geeigneter Säuren umfassen Phosphorsäure, Phosphonsäure oder organische Phosphonsäuren wie 1-Hydroxyethan-1,1-diphosphonsäure (HEDP), 2-Phosphonobutan-1,2,4-tricarbonsäure (PBTC), Aminotri(methylenphosphonsäure) (ATMP), Ethylendiamintetra(methylen-phosphonsäure) (EDTMP) oder Diethylentriaminpenta(methylenphosphonsäure) (DTPMP), Sulfonsäuren wie Methansulfonsäure, Amidosulfonsäure, p-Toluolsulfonsäure, m-Nitrobenzolsulfonsäure und Derivate davon, Salpetersäure, Ameisensäure, Essigsäure. Es können prinzipiell auch ungesättigte Säuren wie Acrylsäure, Methacrylsäure, Maleinsäure, Itaconsäure, Vinylphosphonsäure, Acrylamidopropylsulfonsäure eingesetzt werden. Bevorzugt sind phosphorhaltige Säuren wie H₃PO₄, Phosphonsäure die genannten organischen Phosphonsäuren, HNO₃ oder Methansulfonsäure. Bevorzugt kann es sich um H₃PO₄ oder eine andere phosphorhaltige Säure handeln.

Die zum Passivieren bevorzugt eingesetzte Formulierung (F) umfasst in der Regel 10 bis 35 Gew. %, bevorzugt 12 bis 35 Gew. %, besonders bevorzugt 14 bis 32 Gew. % und ganz besonders bevorzugt 16 bis 28 Gew. % der wasserlöslichen Polymere, bezogen auf die Menge aller Komponenten der Formulierung (d.h. einschließlich der Lösemittel).

Die zum Passivieren bevorzugt eingesetzte Formulierung (F) weist einen pH-Wert von nicht mehr als 5 auf, insbesondere einen pH-Wert von 0,5 bis 5, bevorzugt 0,8 bis 3,5. Der pH-Wert der Zubereitung hängt naturgemäß von der Art und Konzentration der verwendeten Polymere ab. Er kann noch durch weitere basische oder saure Komponenten in der Formulierung beeinflusst werden.

Neben dem Polymer und gegebenenfalls der Säure kann die zum Passivieren eingesetzte Formulierung (F) optional Metallionen oder Metallverbindungen umfassen.

Bei den Metallionen kann es sich mindestens um ein Metallion, ausgewählt aus der Gruppe von Cr, Zn, Mg, Ca , Al, Mn, Mo, Co, Ni, Fe, Ti, Si, Zr, bevorzugt ausgewählt aus der Gruppe von Zn, Mg, Ca oder Al handeln. Bevorzugt umfasst die Zubereitung daneben keine weiteren Metallionen. Die Ionen können als hydratisierte Metallionen vorliegen, sie können aber in Form von gelösten Verbindungen vorliegen, beispielsweise als Komplexverbindungen. Insbesondere können die Ionen Komplexbindungen zu den saueren Gruppen des Polymers aufweisen.

Falls vorhanden beträgt die Menge der Metallionen aus der Gruppe von Cr, Zn, Mg, Ca, Al, Mn, Mo, Co, Ni, Fe, Ti, Si, Zr 0,01 Gew. % bis 20 Gew. %, bevorzugt 0,5 bis 18 Gew. % und besonders bevorzugt 1 bis 15 Gew. %, jeweils bezogen auf die Gesamtmenge aller Polymere X in der Formulierung.

Die Formulierung kann weiterhin mindestens ein gelöstes Phosphation umfassen. Hierbei kann es sich um alle Arten von Phosphationen handeln. Beispielsweise kann es sich um Orthophosphate oder um Diphosphate handeln. Für den Fachmann ist klar, dass in wässriger Lösung je nach pH-Wert und Konzentration ein Gleichgewicht zwischen den verschiedenen Dissoziationsstufen der Ionen vorliegen kann. Weiterhin kann die Formulierung Methansulfonationen umfassen.

Sofern Phosphationen anwesend sind, können die Metallionen und Phosphationen bevorzugt in Form von löslichen Salzen eingesetzt werden, welche beide Ionen enthalten. Beispiele derartiger Verbindungen umfassen Zn₃(PO₄)₂, ZnH₂PO₄, Mg₃(PO₄)₂ oder Ca(H₂PO₄)₂ bzw. entsprechende Hydrate davon.

Die Metallionen und Phosphationen können aber auch getrennt voreinander zugegeben werden. Beispielsweise können die Metallionen in Form der entsprechenden Nitrate, Alkansulfonate oder Carboxylate, beispielsweise Acetate eingesetzt werden, und die Phosphate können in Form von Phosphorsäure eingesetzt werden. Es ist auch möglich, unlösliche- oder schwerlösliche Verbindungen, wie beispielsweise die entsprechenden Carbonate, Oxide, Oxidhydrate oder Hydroxide einzusetzen, welche unter dem Einfluss von Säure gelöst werden.

Analog können Metallionen und Methansulfonationen gemeinsam als Metallsalze von Methansulfonsäure, wie beispielsweise Zn(CH₃SO₃)₂ eingesetzt werden, oder auch getrennt in Form anderer Metallsalze und Methansulfonsäure.

Die Menge der Phosphationen und/oder Methansulfonationen in der Formulierung wird vom Fachmann je nach den gewünschten Eigenschaften der Formulierung festgelegt. Sofern vorhanden beträgt sie im Regelfalle 0,01 Gew. % bis 20 Gew. %, bevorzugt 0,5 bis 25 Gew. %, besonders bevorzugt 1 bis 25 Gew. %, jeweils gerechnet als Orthophosphorsäure und jeweils bezogen auf die wasserlöslichen Polymere.

Optional kann die Formulierung weiterhin mindestens ein in der Formulierung dispergiertes Wachs enthalten. Selbstverständlich können auch Gemische verschiedener

Wachse eingesetzt werden. Der Begriff "Wachs" umfasst hier sowohl das eigentliche Wachs wie auch zur Bildung einer Wachsdispersion gegebenenfalls verwendete Hilfsmittel. Dem Fachmann sind Wachse zum Einsatz in wässrigen Dispersionen bekannt, und er trifft eine geeignete Auswahl. Bei den Wachsen kann es sich beispielsweise um Montanwachse, Polyethylenwachse, Wachse auf Basis von oxidiertem Polyethylen, auf Basis von fluoriertem Polyethylen wie PTFE oder anderen, auf C, H und F basierenden Polymeren handeln. Der Begriff "Polyethylen" soll außerdem Copolymere aus Ethylen und anderen Monomeren, insbesondere anderen Olefinen wie beispielsweise Propylen umfassen. Bevorzugt umfassen derartige Ethylencopolymere mindestens 65 Gew. % Ethylen. Durch den Zusatz von Wachsen kann die Reibung der Oberfläche mit der Oberfläche der zum Umformen eingesetzten Werkzeuge vorteilhaft herabgesetzt werden.

Die Menge von optional eingesetzten Wachsen wird vom Fachmann je nach den gewünschten Eigenschaften der Passivierungsschicht bestimmt. Bewährt hat sich im Regelfalle eine Menge von 0,01 bis 70 Gew. %, bevorzugt 0,5 bis 25 und besonders bevorzugt 1 bis 10 Gew. %, jeweils bezogen auf das bezogen auf die wasserlöslichen Polymere.

Weitere optional einsetzbare Komponenten für die Formulierung umfassen oberflächenaktive Verbindungen, Korrosionsinhibitoren, Komplexbildner oder typische Galvanohilfsmittel.

Der Fachmann trifft unter den prinzipiell möglichen optionalen Komponenten sowie hinsichtlich ihrer Mengen je nach der gewünschten Anwendung eine entsprechende Auswahl. Die Menge optionaler Komponenten neben wasserlöslichen Polymeren sollte aber im Regelfalle nicht mehr als 20 Gew. %, bevorzugt nicht mehr als 10 Gew. % und besonders bevorzugt nicht mehr als 5 Gew. % bezogen auf die Polymere betragen.

Die erfindungsgemäß einzusetzenden Formulierungen (F) können durch einfaches Mischen der Komponenten erhalten werden. Falls Wachse verwendet werden, werden diese bevorzugt zunächst separat in Wasser dispergiert und als Dispersion mit den anderen Komponenten gemischt. Derartige Wachsdispersionen sind auch kommerziell erhältlich.

In einer bevorzugten Ausführungsform der Erfindung handelt es sich bei den wasserlöslichen Polymeren um saure Gruppen umfassende Polymere X oder um basische Gruppen umfassende Polymere Y.

### Formulierungen mit Polymeren X

Bevorzugt weisen die sauren Polymere X mindestens 0,6 mol Säuregruppen / 100 g des Polymers auf. Diese Mengenangabe bezieht sich auf die freien Säuregruppen. Bevorzugt weisen die Polymere mindestens 0,9 mol Säuregruppen / 100 g auf, besonders bevorzugt mindestens 1 mol / 100 g und ganz besonders bevorzugt mindestens 1,2 mol / 100g.

Die sauren Gruppen der Polymere X werden in der Regel aus der Gruppe von Carboxylgruppen, Sulfonsäuregruppen, Phosphor- oder Phosphonsäuregruppen ausgewählt. Bevorzugt handelt es sich um Carboxylgruppen, Phosphor- oder Phosphonsäuregruppen. Bevorzugt umfasst das eingesetzte Polymer X zumindest COOH-Gruppen. Besonders bevorzugt handelt es sich bei dem eingesetzten Polymer X um ein Copolymer aus mindestens zwei verschiedenen säuregruppenhaltigen Monomeren.

Bei Verwendung der sauren Polymere X sollte die Acidität der eingesetzten Formulierung im Wesentlichen durch die Säuregruppen des Polymers hervorgerufen werden. Die Menge an zusätzlichen Säuren neben den Polymeren X in der Formulierung sollte daher in der Regel 50 Gew. % bezüglich der Menge aller Polymere X in der Formulierung zusammen nicht überschreiten. Bevorzugt sollten 30 Gew. %, besonders bevorzugt 20 Gew. % und ganz besonders bevorzugt 10 Gew. % nicht überschritten werden. In einer zweiten, besonders bevorzugten Ausführungsform der Erfindung sind keine zusätzlichen Säuren vorhanden.

Die Säuregruppen des Polymers X sollten bevorzugt als freie Säuregruppen vorliegen. Sie können jedoch auch in geringem Maße mittels Basen, wie beispielsweise Ammoniak, Aminen, Aminoalkoholen oder Alkalimetallhydroxiden neutralisiert werden. Eine derartige teilweise Neutralisierung kann zur pH-Anpassung vorgenommen werden. Sie kann sich aber auch zwangsläufig im Zuge der Herstellung des Polymers ergeben. Es ist dem Fachmann beispielsweise bekannt, dass es notwendig sein kann, im Zuge der Herstellung von säuregruppenreichen Polymeren einen Teil der Säuregruppen zu neutralisieren, um einen Einbau der Monomere in das Polymer zu forcieren.

Der Neutralisationsgrad sollte aber keineswegs zu hoch sein, um einen guten Säureangriff auf die Zinkoberfläche zu gewährleisten. Im Regelfalle sollten daher nicht mehr als 25 mol % der im Polymer X vorhanden Säuregruppen neutralisiert sein, bevorzugt nicht mehr als 20 mol % und besonders bevorzugt nicht mehr als 12 mol %.

Besonders bevorzugt werden zur Ausführung der Erfindung Homo- oder Copolymere X eingesetzt, welche (Meth)acrylsäureeinheiten umfassen.

In einer besonders bevorzugten Ausführungsform der Erfindung handelt es sich bei dem Polymer X um eines oder mehrere wasserlösliche Copolymere X1 aus (Meth)-acrylsäureeinheiten (A) und davon verschiedenen monoethylenisch ungesättigten Monomeren mit sauren Gruppen (B). Optional können weiterhin OH-Gruppen aufweisende (Meth)acrylsäureester (C) und/oder weitere Monomere (D) als Baueinheiten vorhanden sein. Darüber hinaus sind keine weiteren Monomere vorhanden. Die Menge an (Meth)acrylsäure (A) im Copolymer X1 beträgt 30 bis 90 Gew. %, bevorzugt 40 bis 80 Gew. % und besonders bevorzugt 50 bis 70 Gew. %, wobei diese Angabe auf die Summe aller Monomere im Polymer bezogen ist.

Bei dem Monomer (B) handelt es sich um mindestens ein von (A) verschiedenes, aber mit (A) copolymerisierbares, monoethylenisch ungesättigtes Monomer, welches eine oder mehrere saure Gruppen aufweist. Selbstverständlich können auch mehrere verschiedene Monomere (B) eingesetzt werden. Bei den sauren Gruppen in Monomer (B) kann es sich bevorzugt um eine Gruppe ausgewählt aus der Gruppe von Carboxylgruppen, Phosphorsäuregruppen, Phosphonsäuregruppen oder Sulfonsäuregruppen handeln. Bevorzugt handelt es sich um eine Gruppe ausgewählt aus der Gruppe von Carboxylgruppen, Phosphorsäuregruppen oder Phosphonsäuregruppen. Beispiele derartiger Monomere umfassen Crotonsäure, Vinylessigsäure, C₁ - C₄ Halbester monoethylenisch ungesättigter Dicarbonsäuren, Styrolsulfonsäure, Vinylsulfonsäure, Allylsulfonsäure, 2-Acrylamido-2methyl-1 propansulfonsäure (AMPS), Vinylphosphonsäure, Phosphorsäuremonovinylester, Maleinsäure, Fumarsäure oder Itaconsäure. Die Menge der Monomere (B) im Copolymer X1 beträgt 10 bis 70 Gew. %, bevorzugt 20 bis 60 Gew. %, und besonders bevorzugt 30 bis 50 Gew. %, jeweils bezogen auf die Summe aller Monomere im Polymer.

In einer bevorzugten Ausführungsform der Erfindung handelt es sich bei den Monomeren (B) um monoethylenisch ungesättigte Dicarbonsäuren mit 4 bis 7 Kohlenstoffatomen (B1) und/oder monoethylenisch ungesättigte Phosphor- und/oder Phosphonsäuren (B2).

Beispiele für Monomere (B1) umfassen Maleinsäure, Fumarsäure, Methylfumarsäure, Methylmaleinsäure, Dimethylmaleinsäure, Methylenmalonsäure oder Itaconsäure. Die Monomere können gegebenenfalls auch in Form der entsprechenden cyclischen Anhydride eingesetzt werden. Bevorzugt sind Maleinsäure, Fumarsäure und Itaconsäure, besonders bevorzugt sind Maleinsäure bzw. Maleinsäureanhydrid.

Beispiele für Monomere (B2) umfassen Vinylphosphonsäure, Phosphorsäuremonovinylester, Allylphosphonsäure, Phosphorsäuremonoallylester, 3-Butenylphosphonsäure, Phosphorsäure(mono-3-butenyl)ester, Phosphorsäuremono-(4-vinyloxybutyl)ester, Acrylsäure(phosphonoxyethyl)ester, Methacrylsäure(phosphonoxyethyl)ester, Phosphorsäure mono-(-2-hydroxy-3-vinyloxy-propyl)ester, Phosphorsäuremono-(1-phosphonoxymethyl-2-vinyloxy-ethyl)-ester, Phosphorsäuremono-(3-allyloxy-2-hydroxypropyl)-ester, Phosphorsäure mono-2-(allylox-1-phosphonoxymethyl-ethyl)ester, 2-Hydroxy-4-vinyloxymethyl-1,3,2-dioxaphosphol, 2-Hydroxy-4-allyloxymethyl-1,3,2-dioxaphosphol. Bevorzugt handelt es sich um Vinylphosphonsäure, Phosphorsäuremonovinylester oder Allylphosphonsäure, besonders bevorzugt ist Vinylphosphonsäure.

Das Copolymer X1 kann darüber hinaus optional mindestens einen OH-Gruppen aufweisenden (Meth)acrylsäureester (C) enthalten. Bevorzugt handelt es sich um Mono-hydroxy(meth)acrylsäureester.

Bevorzugt handelt es sich bei den Monomeren (C) um mindestens einen (Meth)acrylsäureester der allgemeinen Formel H₂C=CHR¹-COOR², wobei R¹ in prinzipiell bekannter Art und Weise für H oder Methyl steht und R² aus der Gruppe von R^{2a}, R^{2b} oder R^{2c} ausgewählt wird.

Bei den Resten R^{2a} handelt es sich um Reste der allgemeinen Formel -(R³-O-)ₙ-H. Hierbei steht n für eine natürliche Zahl von 2 bis 40. Bevorzugt steht n für 2 bis 20 und besonders bevorzugt für 2 bis 10. Die Reste R³ stehen jeweils unabhängig voneinander für einen zweiwertigen, geradkettigen oder verzweigten Alkylrest mit 2 bis 4 C-Atomen. Beispiele umfassen insbesondere 1,2-Ethylenreste, 1,2-Propylenreste, 1,2-Butylenreste sowie 1,4-Butylenreste. Selbstverständlich kann es sich auch um Gemische verschiedener Reste handeln. Bevorzugt handelt es sich um 1,2-Ethylen- und/oder 1,2-Propylenreste. Besonders bevorzugt handelt es sich ausschließlich um 1,2-Ethylenreste. Weiterhin bevorzugt sind Reste (R^{2a}), die sowohl 1,2-Ethylen- und 1,2-Propylenreste aufweisen, wobei die Menge der Ethylenreste mindestens 50 %, bevorzugt mindestens 70 % und besonders bevorzugt mindestens 80 % bezogen auf die Gesamtanzahl aller Reste R³ beträgt. Beispiele von Resten R^{2a} umfassen -CH₂-CH₂-O-CH₂-CH₂-O-CH₂-CH₃, -CH₂-CH(CH₃)-O-CH₂-CH(CH₃)OH, -CH₂-CH(CH₃)-O-CH(CH₃)-CH₂OH, - CH(CH₃)-CH₂- O-CH(CH₃)-CH₂OH oder -CH(CH₃)-CH₂-O-CH₂-CH(CH₃)OH.

Bei den Resten R^{2b} handelt es sich um Reste der allgemeinen Formel -R⁴-(OH)ₘ. Hierbei steht m für eine natürliche Zahl von 1 bis 6, bevorzugt 1 bis 4, besonders bevorzugt 1 bis 3 und beispielsweise 1 oder 2. Der Rest R⁴ steht für einen (m+1)-wertigen, geradkettigen oder verzweigten Alkylrest mit 2 bis 10 C-Atomen, bevorzugt 2 bis 6 C-Atomen und besonders bevorzugt 2 bis 4 C-Atomen.

Der Alkylrest ist mit mindestens einer OH-Gruppe substituiert, mit der Maßgabe, dass nicht mehr als eine OH-Gruppe X pro C-Atom in R⁴ vorhanden ist. Beispiele geeigneter Reste R^{2b} mit OH-Gruppen umfassen lineare Reste der allgemeinen Formel -(CH₂)ₘ-OH wie -CH₂-CH₂-OH, -CH₂-CH₂-CH₂-OH, -CH₂-CH₂-CH₂-CH₂-OH oder -CH₂-CH₂-CH₂-CH₂-CH₂-CH₂-OH.

Besonders bevorzugte Reste R^{2b} zur Ausführung der Erfindung sind Reste ausgewählt aus der Gruppe von -CH₂-CH₂-OH, -CH₂-CH₂-CH₂-OH, -CH₂-CH₂-CH₂-CH₂-OH, - CH₂-CH(CH₃)- OH, -CH(CH₃)-CH₂-OH oder -CH₂-CH(OH)-CH₂-OH.

In einer weiteren, bevorzugten Ausführungsform der Erfindung handelt es sich bei mindestens einem der Reste R^{2b} um einen verzweigten Alkylrest der allgemeinen Formel - R⁵-CH(R⁶)OH. Hierbei stehen R⁵ und R⁶ jeweils für einen linearen oder verzweigten Alkylrest mit 1 bis 8 C-Atomen, bevorzugt 1 bis 6 C-Atomen und besonders bevorzugt 1 bis 4 C-Atomen, mit der Maßgabe, dass die Summe der C-Atome in R⁵ und R⁶ nicht mehr als 9 beträgt. Bevorzugt handelt es sich bei R⁵ und R⁶ jeweils um lineare Alkylgruppen. Besonders bevorzugt handelt es sich bei R⁶ um eine Methylgruppe. Beispielsweise kann es sich um -CH₂-CH(CH₃)-OH handeln. Bei derartigen verzweigten (Meth)acrylsäureestern ist die Tendenz der OH-Gruppe zur Bildung weiterer Esterbindungen mit anderen COOH-haltigen Monomeren deutlich herabgesetzt. Ganz besonders bevorzugt sind -CH₂-CH(CH₃)-OH und/oder-CH(CH₃)-CH₂-OH, insbesondere ein Gemisch aus beiden Resten. (Meth)acrylsäureester mit derartigen Resten können auf einfache Art und Weise, z. B. durch Veresterung von (Meth)acrylsäure mit 1,2-Propylenglykol erhalten werden.

Bei den Resten R^{2c} handelt es sich um Mono- oder Oligosaccharidreste, bevorzugt um Monosaccharidreste. Es kann sich prinzipiell um alle Arten von Sacchariden handeln. Bevorzugt können von Pentosen und Hexosen, insbesondere von Hexosen abgeleitete Reste eingesetzt werden. Beispiele geeigneter Monosaccharide umfassen Glucose, Mannose, Galaktose, Fruktose oder Ribose. Bevorzugt können von Glukose abgeleitete Rest eingesetzt werden. Es kann sich auch um Derivate der Saccharide handeln, beispielsweise um durch Reduktion oder Oxidation aus den Sacchariden hervorgehende Produkte. Insbesondere kann es sich um Zuckersäuren wie beispielsweise Gluconsäure handeln.

Die Menge der Monomere (C) im Copolymer X1 beträgt 0 bis 40 Gew. %, bevorzugt 1 bis 30 Gew. %.

Neben den Monomeren (A), (B), (C) sowie gegebenenfalls (D) kann optional 0 bis 30 Gew. % mindestens eines weiteren, von (A), (B) und (C) verschiedenen, ethylenisch ungesättigten Monomers (D) eingesetzt werden. Darüber hinaus werden keine anderen Monomere eingesetzt.

Die Monomere (D) dienen zur Feinsteuerung der Eigenschaften des Copolymers X1. Selbstverständlich können auch mehrere verschiedene Monomere (D) eingesetzt werden. Sie werden vom Fachmann je nach den gewünschten Eigenschaften des Copolymers ausgewählt und weiterhin mit der Maßgabe, dass sie mit den Monomeren (A), (B) und (C) copolymerisierbar sein müssen.

Bevorzugt handelt es sich um monoethylenisch ungesättigte Monomere. In besonderen Fällen können aber auch geringe Mengen von Monomeren mit mehreren polymerisierbaren Gruppen eingesetzt werden. Hierdurch kann das Copolymer in geringem Umfange vernetzt werden.

Beispiele geeigneter Monomere (D) umfassen insbesondere aliphatische Alkylester der (Meth)acrylsäure, wie Methyl(meth)acrylat, Ethyl(meth)acrylat, Butyl(meth)acrylat oder 2-Ethylhexyl (meth)acrylat. Weiterhin geeignet sind Vinyl- oder Allylether wie z.B. Methylvinylether, Ethylvinylether, Propylvinylether, 2-Ethylhexylvinylether, Vinylcyclohexylether, Vinyl-4-hydroxybutylether, Decylvinylether, 2-(Diethyl-amino)ethylvinylether, 2-(Di-n-butyl-amino)ethylvinylether oder Methyldiglykolvinylether bzw. die entsprechenden Allylverbindungen. Ebenfalls eingesetzt werden können Vinylester wie beispielsweise Vinylacetat oder Vinylpropionat. Es können auch basische Comonomere, wie beispielsweise Acrylamid und alkylsubstituierte Acrylamide eingesetzt werden.

Beispiele für vernetzende Monomere umfassen Moleküle mit mehreren ethylenisch ungesättigten Gruppen, beispielsweise Di(meth)acrylate wie Ethylenglykoldi(meth)-acrylat oder Butandiol-1,4-di(meth)acrylat oder Poly(meth)acrylate wie Trimethylolpropantri(meth)acrylat oder auch Di(meth)acrylate von Oligo- oder Polyalkylenglykolen wie Di-, Tri- oder Tetraethylenglykoldi(meth)acrylat. Weitere Beispiele umfassen Vinyl-(meth)acrylat oder Butandioldivinylether.

Die Menge aller eingesetzten Monomere (D) zusammen beträgt 0 bis 30 Gew. % bezogen auf die Gesamtmenge der eingesetzten Monomere. Bevorzugt beträgt die Menge 0 bis 20 Gew. %, besonders bevorzugt 0 bis 10 %. Falls vernetzende wirkende Monomere (D) anwesend sind, sollte deren Menge im Regelfalle 5 %, bevorzugt 2 Gew. % bezogen auf die Gesamtmenge aller für das Verfahren eingesetzten Monomere nicht überschreiten. Sie kann beispielsweise 10 ppm bis 1 Gew. % betragen.

In einer ersten bevorzugten Ausführungsform der Erfindung enthält das Copolymer X1 neben (A) mindestens ein Monomer (B). Bevorzugt sind neben den Monomeren (A) und (B) bei weiteren Monomere (C) oder (D) vorhanden. Die Menge von (A) beträgt bei dieser Ausführungsform bevorzugt 60 bis 90 Gew. % und die Menge von (B) 10 bis 40 Gew. %. Besonders bevorzugt handelt es sich bei dieser Ausführungsform um ein Copolymer X1 aus Acrylsäure und Maleinsäure oder Acrylsäure und Itaconsäure in den vorstehend genannten Mengen.

In einer zweiten bevorzugten Ausführungsform der Erfindung enthält das Copolymer X1 neben (A) mindestens ein Monomer (B1) und mindestens ein Monomer (B2). Weiterhin besonders bevorzugt sind neben den Monomeren (A), (B1) und (B2) keine weiteren Monomere (D) vorhanden. Die Menge von (A) beträgt bei dieser Ausführungsform bevorzugt 50 bis 90 Gew. %, die Menge von (B1) 5 bis 45 Gew. %, die Menge (B2) 5 bis 45 Gew. % und die Menge von (D) 0 bis 20 Gew. %. Besonders bevorzugt handelt es sich um ein Copolymer X1 aus Acrylsäure, Maleinsäure und Vinylphosphonsäure in den vorstehend genannten Mengen.

In einer dritten, bevorzugten Ausführungsform der Erfindung enthält das Copolymer X1 neben (A) mindestens ein Monomer (B2) und mindestens ein Monomer (C). Die Menge von (A) beträgt bei dieser Ausführungsform bevorzugt 20 bis 60 Gew. %, die Menge (B2) 20 bis 60 Gew. %, die Menge von (C) 1 bis 40 Gew. % und die Menge von (D) 0 bis 20 Gew. %. Besonders bevorzugt handelt es um ein Copolymer X1 aus Acrylsäure, Vinylphosphonsäure und Hydroxyethylacrylat und/oder Hydroxypropylacrylat.

Die Herstellung der Polymere X kann nach dem Fachmann bekannten Verfahren erfolgen. Bevorzugt werden die Copolymere durch radikalische Polymerisation der genannten Komponenten (A), (B) und optional (C) und/oder (D) in wässriger Lösung hergestellt. Einzelheiten zum Durchführen einer radikalischen Polymerisation sind dem Fachmann bekannt. Herstellverfahren für die Copolymere X1 sind beispielsweise in WO 2006/021308 oder in WO 2006/134116 Seite 9, Zeile 38 bis Seite 13, Zeile 24 beschrieben.

Die synthetisierten Copolymere X1 können aus der wässrigen Lösung mittels üblicher, dem Fachmann bekannter Methoden isoliert werden, beispielsweise durch Eindampfen der Lösung, Sprühtrocknen, Gefriertrocknen oder Fällung. Bevorzugt werden die Copolymere X1 nach der Polymerisation aber überhaupt nicht aus der wässrigen Lösung isoliert, sondern die erhaltenen Lösungen der Copolymere werden -ggf. nach Zugabe weiterer Zusatzstoffe- als solche für das erfindungsgemäße Verfahren eingesetzt. Um eine solche direkte Weiterverwendung zu erleichtern, sollte die Menge des zur Polymerisation verwendeten wässrigen Lösemittels von Anfang an so bemessen werden, dass die Konzentration des Polymers im Lösemittel für die Anwendung geeignet ist. Es kann auch zunächst ein Konzentrat hergestellt werden, welches erst vor Ort mit Wasser oder optional anderen Lösemittelgemischen auf die gewünschte Konzentration verdünnt wird.

Das Molekulargewicht M_{w} (Gewichtsmittel) der für das erfindungsgemäße Verfahren eingesetzten Polymere X bzw. Copolymere X1 wird vom Fachmann je nach der gewünschten Anwendung festgelegt. Eingesetzt werden können beispielsweise Polymere mit einem Molekulargewicht M_{w} von 3000 bis 1 000 000 g/mol. Bewährt haben sich insbesondere Polymere mit 5000 g/mol bis 500 000 g/mol, bevorzugt 10 000 g/mol bis 250 000 g/mol, besonders bevorzugt 15 000 bis 100 000 g/mol und ganz besonders bevorzugt 20 000 bis 75 000 g/mol.

### Formulierungen mit Polymeren Y

Die Polymere Y weisen eine oder mehrere verschiedene basische Gruppen auf. Bevorzugt handelt es sich bei den basischen Gruppen mindestens um aliphatische und/oder aromatische Aminogruppen umfassende Gruppen, und besonders bevorzugt um Heterocyclen mit 5-6 Ringgliedern und 1-3 Stickstoffatomen.

In einer bevorzugten Ausführungsform der Erfindung kann es sich bei dem Polymer Y um Polyethylenimin (PEI) oder Derivate von Polyethylenimin handeln. Bei Derivaten kann handelt es sich insbesondere um N-funktionalisierte Derivate von Polyethylenimin handeln, insbesondere um Derivate, welche >N-(CH₂)ₓ-S -Gruppen aufweisen, wobei x bevorzugt für 1 oder 2 und S für eine saure Gruppe, insbesondere eine Carboxylgruppe oder eine Phosphonsäuregruppe steht. Derartige PEI-Derivate lassen sich beispielsweise durch Umsetzung von nicht funktionalisiertem PEI mit Acrylsäure oder Vinylphosphonsäure erhalten.

In einer weiteren bevorzugten Ausführungsform der Erfindung kann es sich um Polymere Y auf Basis entsprechender Vinylverbindungen handeln. Beispiele geeigneter Monomere zum Aufbau derartiger Polymere Y umfassen Vinylimidazol, Vinyllactame wie N-Vinylcaprolactam, N-Vinylpyrrolidon oder andere Vinylheterocyclen wie Vinylpyridin. Bevorzugt handelt es sich um Vinylimidazol umfassende Polymere. Sie können darüber hinaus auch noch andere Comonomere enthalten, wie beispielsweise Alkylacrylate oder auch saure Gruppen umfassende Monomere. Zum Passivieren geeignete basische Polymere Y sind beispielsweise in WO 2004/081128 offenbart.

Um den gewünschten sauren pH-Wert zu erreichen, werden der Formulierung -wie oben beschrieben- im Regelfalle zusätzliche Säuren zugesetzt. Sofern die Polymere Y neben den basischen Gruppen eine ausreichende Menge an zusätzlichen sauren Gruppen aufweisen, kann auf den Zusatz von Säuren gegebenenfalls auch verzichtet werden.

### Schichtdickenbestimmung und Anlagensteuerung mit dem IR-Sensor

Bei dem erfindungsgemäßen Verfahren werden die vom IR-Sensor (6) gemessenen Intensitäten der von der Bandoberfläche reflektierten IR-Strahlung zur Bestimmung der Schichtdicke herangezogen. Die Bestimmung erfolgt anhand eines Vergleichs mit einer Kalibrierkurve.

Die IR-Filter (11) des Mehrkanaldetektors (10) werden hierbei vom Fachmann an die Natur der verwendeten Formulierung (F) angepasst. Der Fachmann trifft je nach den Komponenten eine geeignete Auswahl. Gemessen werden im Regelfalle besonders gut IR-absorbierende Bereiche.

In einer bevorzugten Ausführungsform des erfindungsgemäßen Verfahrens wird zur Messung aus dem IR-Spektrum der Vergütungsschicht mindestens ein besonders gut absorbierender Bereich gewählt, sowie weiterhin mindestens ein Bereich, in dem die Vergütungsschicht keine oder zumindest nur schwach IR-absorbierend ist, und der Mehrkanaldetektor (10) wird entsprechend den gewählten Bereichen mit den entsprechenden IR-Filtern (11) ausgestattet. Die zusätzliche Messung eines nicht oder nur schwach IR-absorbierenden Bereiches dient der Eliminierung von Untergrundeffekten. Unter Verwendung beider Messdaten lässt sich die relative Zunahme der Absorption im stark absorbierenden Bereich bestimmen. Bei mehr als zwei Messkanälen können beispielsweise mehrere Banden oder mehrere Nullwerte gemessen werden.

Die vom IR-Sensor (6) ermittelten Messdaten werden im Sensor oder einer externen Recheneinheit ausgewertet und daraus die Schichtdicke berechnet, indem man die gemessenen Intensitäten bzw. des berechneten Ergebnisses mit einer Kalibrierkurve vergleicht. Die Kalibierkurve ist für jede verwendete Formulierung spezifisch. Sie kann erhalten werden, indem man die zur Oberflächenbehandlung jeweils eingesetzte Formulierung (F) in verschiedenen Schichtdicken auf ein Metall aufträgt, jeweils die IR-Daten mittels des Sensors (6) misst und die Schichtdicke mittels einer davon unabhängigen Methode ermittelt.

Werden mehrere Sensoren zur gleichzeitigen Schichtdickenbestimmung an mehreren Punkten auf einem Band eingesetzt, so können die einzelnen Schichtdicken von den jeweiligen Sensoren an eine zentrale Steuereinheit, bzw. von den einzelnen Sensoren an eine Konzentratoreinheit und von dieser an eine zentrale Steuereinheit übermittelt werden.

Die ermittelte Schichtdicke kann dazu verwendet werden, um die Menge der aufzutragenden Formulierung (F) zu steuern und somit den gewünschten Sollwert der Schichtdicke zu erhalten.

Besonders vorteilhaft kann das erfindungsgemäße Verfahren eingesetzt werden, wenn die Vergütungsschicht organische Komponenten enthält. Im bevorzugten Arbeitsbereich des IR-Sensors (6) von 2500 bis 4000 cm⁻¹ absorbieren insbesondere C-H-Banden, sowie auch O-H- oder N-H-Banden. Ganz besonders vorteilhaft kann das erfindungsgemäße Verfahren angewandt werden, wenn es sich bei der Oberflächenbehandlung um eine Passivierung handelt, und die zum Passivieren eingesetzte Formulierung wasserlösliche oder wasserdispergierbare Polymere umfasst. Besonders bevorzugt kann man bei dieser Ausführungsform der Erfindung mittels des IR-Sensors Banden mit Maxima bei 2500-3500 cm⁻¹ messen. Bei 2500 bis 3500 cm⁻¹ absorbieren beispielsweise C-H-Absorptionen des Polymerrückgrates.

Die nachfolgenden Beispiele sollen die Erfindung exemplarisch illustrieren: Es wurden die folgenden Formulierungen zum Passivieren eingesetzt:

### Formulierung I:

Wässrige Formulierung mit 25 Gew. % Polyacrylsäure (M_{w} ca. 40.000 g/mol, 1,39 mol Säuregruppen /100 g des Polymers) sowie 0,5 Gew. % Salpetersäure bezogen auf die Formulierung. Der pH-Wert der Formulierung betrug 0,9.

### Formulierung II:

Wässrige Formulierung mit 20 Gew. % Polyacrylsäure (M_{w} ca. 40.000 g/mol, 1,39 mol Säuregruppen / 100 g des Polymers) sowie 0,5 Gew. % Salpetersäure bezogen auf die Formulierung. Der pH-Wert der Formulierung betrug 0,9.

### Formulierung III:

Wässrige Formulierung mit 25 Gew. % Polyacrylsäure (M_{w} ca. 40.000 g/mol, 1,39 mol Säuregruppen / 100 g des Polymers) sowie 2,3 Gew. % Salpetersäure bezogen auf die Formulierung. Der pH-Wert der Formulierung betrug 0,4.

### Durchführung der Passivierung:

Die Formulierungen werden jeweils unter Verwendung einer Bandbeschichtungsanlage analog zu Abb. 1 auf ein verzinktes Stahlband aufgebracht. Das Metallband weist eine Breite von 1450 mm und die Bandgeschwindigkeit beträgt 105 m/min.

Es wird ein IR-Sensor mit 4 IR-Quellen sowie einem 4-Kanaldetektor eingesetzt. Der IR-Sensor ist in einem Abstand von ca. 20 m hinter dem Trockner oberhalb des Stahlbandes in einer Entfernung von 30 mm von der Bandoberfläche angebracht. Der 4-Kanaldetektor ist mit Filtern zur Selektion von IR-Strahlung bei 3400 nm (2941 cm⁻¹; Halbwertsbreite 120 nm), 3950 nm (2531 cm⁻¹; Halbwertsbreite 90 nm), 4450 nm (2247 cm⁻¹; Halbwertsbreite 60 nm) und 4660 nm (2145 cm⁻¹; Halbwertsbreite 180 nm) ausgestattet. Zur Messung werden nur die Kanäle bei 2941 cm⁻¹ und 2531 cm⁻¹ verwendet. Das IR-Spektrum der Formulierungen weist bei 2941 cm⁻¹ relativ starke Absorptionen und bei 2531 cm⁻¹ nur geringe Absorptionen auf.

Die aufgesprühte Menge an Formulierung ist jeweils gleich. Bei Formulierung I wird eine Vergütungsschicht mit einer Dicke von ca. 0,6 µm erhalten, bei Formulierung II mit einer Dicke von ca. 0,3 µm und bei Formulierung III mit einer Dicke von ca. 0,6 µm.

## Patentansprüche

1. Verfahren zur kontinuierlichen Oberflächenbehandlung eines Metallbandes mit einer flüssigen Formulierung (F), bei dem ein Metallband in Längsrichtung durch eine Vorrichtung zur Oberflächenbehandlung von Metallbändern bewegt wird, welche mindestens eine Vorrichtung (3) zum Auftragen der Formulierung (F) umfasst und man mittels der Vorrichtung (3) die Formulierung (F) auf das Metallband aufträgt, wobei man die Menge der aufzutragenden Formulierung so bemisst, dass sich eine nicht metallische Vergütungsschicht mit einer Schichtdicke von weniger als 3 µm auf der Metalloberfläche bildet, **dadurch gekennzeichnet, dass** die eingesetzte Vorrichtung -in Laufrichtung des Bandes betrachtet- nach der Vorrichtung (3) mit mindestens einem, einer beschichteten Seite des Bandes zugewandten, in Reflexionsgeometrie arbeitenden IR-Sensor (6) ausgestattet ist, welcher
- mindestens eine breitbandig emittierende IR-Quelle (9), sowie
- mindestens einen, mindestens zwei Messkanäle umfassenden IR-Mehr- kanaldetektor (10) umfasst, wobei jeder der Messkanäle mit einem vor dem betreffenden Messkanal angebrachten IR-Filter (11) ausgestattet ist, welcher jeweils nur für einen bestimmten Wellenlängenbereich der IR-Strahlung durchlässig ist, mit der Maßgabe, dass wenigstens zwei unterschiedliche IR-Filter eingesetzt werden,
und wobei die IR-Quelle (9) IR-Strahlung zur beschichteten Bandoberfläche hin abstrahlt, die Strahlung von der Bandoberfläche teilweise reflektiert, die Intensität der reflektierten Strahlung mit dem IR-Mehrkanaldetektor (10) gemessen wird, und man aus der Intensitätsmessung mittels einer Recheneinheit die Schichtdicke der Vergütungsschicht errechnet.

2. Verfahren zur kontinuierlichen Oberflächenbehandlung eines Metallbandes mit einer flüssigen Formulierung (F), bei dem ein Metallband in Längsrichtung durch eine Vorrichtung zur Oberflächenbehandlung von Metallbändern bewegt wird, welche mindestens
• eine Vorrichtung (3) zum Auftragen der Formulierung (F) und
• eine Trockenstation (5) umfasst,
wobei die Formulierung (F) mindestens ein Lösemittel sowie beschichtungsbildende Komponenten umfasst, man mittels der Vorrichtung (3) die Formulierung (F) auf das Metallband aufträgt, mittels der Trockenstation die Lösemittel zumindest teilweise entfernt, und wobei man die Menge der aufzutragenden Formulierung so bemisst, dass sich eine nicht metallische Vergütungsschicht mit einer Trockenschichtdicke von weniger als 3 µm auf der Metalloberfläche bildet,
**dadurch gekennzeichnet, dass** die eingesetzte Vorrichtung -in Laufrichtung des Bandes betrachtet- nach der Trockenstation (5) mit mindestens einem, einer beschichteten Seite des Bandes zugewandten, in Reflexionsgeometrie arbeitenden IR-Sensor (6) ausgestattet ist, welcher
- mindestens eine breitbandig emittierende IR-Quelle (9), sowie
- mindestens einen, mindestens zwei Messkanäle umfassenden IR-Mehr- kanaldetektor (10) umfasst, wobei jeder der Messkanäle mit einem vor dem betreffenden Messkanal angebrachten IR-Filter (11) ausgestattet ist, welcher jeweils nur für einen bestimmten Wellenlängenbereich der IR-Strahlung durchlässig ist, mit der Maßgabe, dass wenigstens zwei unterschiedliche IR-Filter eingesetzt werden,
und wobei die IR-Quelle (9) IR-Strahlung zur beschichteten Bandoberfläche hin abstrahlt, die Strahlung von der Bandoberfläche teilweise reflektiert, die Intensität der reflektierten Strahlung mit dem IR-Mehrkanaldetektor (10) gemessen wird, und man aus der Intensitätsmessung mittels einer Recheneinheit die Schichtdicke der Vergütungsschicht errechnet.

3. Verfahren gemäß Anspruch 1 oder 2, **dadurch gekennzeichnet, dass** man die gemessene Schichtdicke zur Steuerung der aufzutragenden Menge an Formulierung (F) verwendet.

4. Verfahren gemäß einem der Ansprüche 1 bis 3, **dadurch gekennzeichnet, dass** es sich um eine sensorinterne Recheneinheit handelt.

5. Verfahren gemäß einem der Ansprüche 1 bis 4, **dadurch gekennzeichnet, dass** der IR-Sensor (6) mindestens zwei IR-Quellen (9) umfasst, welche den Detektor konzentrisch umgeben.

6. Verfahren gemäß Anspruch 5, **dadurch gekennzeichnet, dass** der IR-Sensor 4 bis 10 IR-Quellen (9) aufweist.

7. Verfahren gemäß einem der Ansprüche 1 bis 6, **dadurch gekennzeichnet, dass** der IR-Mehrkanaldetektor (10) 2 bis 4 Messkanäle aufweist.

8. Verfahren gemäß einem der Ansprüche 1 bis 7, **dadurch gekennzeichnet, dass** der IR-Mehrkanaldetektor (10) im Bereich von 2000 bis 5000 cm⁻¹ arbeitet.

9. Verfahren gemäß einem der Ansprüche 1 bis 8 **dadurch gekennzeichnet, dass** das Metallband auf der vom IR-Sensor abgewandten Seite des Metallbandes mit einer Stütz- bzw. Umlenkrolle (8) gelagert ist, welche nicht mehr als 4 m von der Stelle der IR-Messung entfernt ist.

10. Verfahren gemäß Anspruch einem der Ansprüche 1 bis 9 **dadurch gekennzeichnet, dass** es sich bei dem Metallband um ein Stahlband oder ein verzinktes Stahlband handelt.

11. Verfahren gemäß Anspruch 10 **dadurch gekennzeichnet, dass** es sich bei der Oberflächenbehandlung um eine Passivierung handelt.

12. Verfahren gemäß Anspruch 11, **dadurch gekennzeichnet, dass** es sich um eine Phosphatpassivierung handelt, bei der eine saure, wässrige Formulierung mit einem pH-Wert ≤ 5 eingesetzt wird, welche neben Wasser mindestens Phosphorsäure und/oder Phosphat sowie mindestens ein Metallion umfasst.

13. Verfahren gemäß Anspruch 11, **dadurch gekennzeichnet, dass** man zur Passivierung eine saure, wässrige Formulierung mit einem pH-Wert ≤ 5 einsetzt, welche neben Wasser mindestens ein wasserlösliches oder wasserdispergierbares Polymer umfasst.

14. Verfahren gemäß Anspruch 13, **dadurch gekennzeichnet, dass** es sich bei dem Polymer um mindestens ein wasserlösliches, saure Gruppen umfassendes Polymer X handelt.

15. Verfahren gemäß Anspruch 14, **dadurch gekennzeichnet, dass** es sich bei den sauren Gruppen um -COOH-Gruppen und/oder Salze davon handelt.

16. Verfahren gemäß Anspruch 13, **dadurch gekennzeichnet, dass** es sich bei dem Polymer um ein wasserlösliches, basische Gruppen umfassendes Polymer Y handelt.

17. Verfahren gemäß Anspruch 16, **dadurch gekennzeichnet, dass** es sich bei den basischen Gruppen um mindestens aliphatische und/oder aromatische Aminogruppen umfassende Gruppe handelt.

18. Verfahren gemäß Anspruch 17, **dadurch gekennzeichnet, dass** es sich bei der basischen Gruppe um einen Heterocyklus mit 5-6 Ringgliedern und 1-3 Stickstoffatomen handelt.

19. Verfahren gemäß einem der Ansprüche 13 bis 18, bei dem man mittels des IR-Sensors (5) Banden mit Maxima bei 2500-3500 cm⁻¹ und/oder bei 1400-2000 cm⁻¹ vermisst.

20. Verfahren gemäß Anspruch 19, **dadurch gekennzeichnet, dass** man C-H -Banden vermisst.

## Claims

1. A method for continuous surface treatment of a metal strip with a liquid formulation (F), in which a metal strip is moved longitudinally through an apparatus for surface treatment of metal strips that comprises at least one device (3) for applying the formulation (F) and in which the formulation (F) is applied to the metal strip by means of the device (3), the amount of formulation to be applied being calculated so as to form a nonmetallic finish coat having a coat thickness of less than 3 µm on the metal surface, which method comprises equipping the apparatus employed, downstream of the device (3) - as viewed in the running direction of the strip - with at least one IR sensor (6) which faces a coated side of the strip, operates in reflection geometry, and comprises
- at least one broadband-emitting IR source (9), and also
- at least one IR multichannel detector (10) comprising at least two measurement channels, each of the measurement channels being equipped with an IR filter (11) which is mounted upstream of the measurement channel in question, and each of which is transmissive only for a particular wavelength range of the IR radiation with the proviso that at least two different IR filters are used,
and in which the IR source (9) emits IR radiation toward the coated strip surface, the radiation is partly reflected from the strip surface, and the intensity of the reflected radiation is measured with the IR multichannel detector (10), and from the intensity measurement, by means of an arithmetic unit, the coat thickness of the finish coat is calculated.

2. A method for continuous surface treatment of a metal strip with a liquid formulation (F), in which a metal strip is moved longitudinally through an apparatus for surface treatment of metal strips that comprises at least
• a device (3) for applying the formulation (F) and
• a drying station (5),
in which the formulation (F) comprises at least one solvent and also coating-forming components, the formulation (F) is applied to the metal strip by means of the device (3), the solvents are at least partly removed by means of the drying station, the amount of formulation to be applied being calculated so as to form a nonmetallic finish coat having a dry coat thickness of less than 3 µm on the metal surface, which method comprises equipping the apparatus employed, downstream of the drying station (5) - as viewed in the running direction of the strip - with at least one IR sensor (6) which faces a coated side of the strip, operates in reflection geometry, and comprises
- at least one broadband-emitting IR source (9), and also
- at least one IR multichannel detector (10) comprising at least two measurement channels, each of the measurement channels being equipped with an IR filter (11) which is mounted upstream of the measurement channel in question, and each of which is transmissive only for a particular wavelength range of the IR radiation with the proviso that at least two different IR filters are used,
and in which the IR source (9) emits IR radiation toward the coated strip surface, the radiation is partly reflected from the strip surface, and the intensity of the reflected radiation is measured with the IR multichannel detector (10), and from the intensity measurement, by means of an arithmetic unit, the coat thickness of the finish coat is calculated.

3. The method according to claim 1 or 2, wherein the measured coat thickness is used to control the amount of formulation (F) to be applied.

4. The method according to any of claims 1 to 3, wherein the arithmetic unit is internal to the sensor.

5. The method according to any of claims 1 to 4, wherein the IR sensor (6) comprises at last two IR sources (9) which surround the detector concentrically.

6. The method according to claim 5, wherein the IR sensor has 4 to 10 IR sources (9).

7. The method according to any of claims 1 to 6, wherein the IR multichannel detector (10) has 2 to 4 measurement channels.

8. The method according to any of claims 1 to 7, wherein the multichannel IR detector (10) operates in the range from 2000 to 5000 cm⁻¹.

9. The method according to any of claims 1 to 8, wherein the metal strip is mounted, on its side remote from the IR sensor, with a support roller or deflection roller (8) which is at a distance of not more than 4 m from the site of the IR measurement.

10. The method according to any of claims 1 to 9, wherein the metal strip is a steel strip or a galvanized steel strip.

11. The method according to claim 10, wherein the surface treatment is a passivation.

12. The method according to claim 11, wherein the treatment is a phosphate passivation using an acidic, aqueous formulation having a pH ≤ 5 and comprising as well as water at least phosphoric acid and/or phosphate and also at least one metal ion.

13. The method according to claim 11, wherein passivation is carried out using an acidic, aqueous formulation having a pH ≤ 5 and comprising as well as water at least one water-soluble or water-dispersible polymer.

14. The method according to claim 13, wherein said polymer is at least one water-soluble polymer X comprising acidic groups.

15. The method according to claim 14, wherein said acidic groups are -COOH- groups and/or salts thereof.

16. The method according to claim 13, wherein said polymer is a water-soluble polymer Y comprising basic groups.

17. The method according to claim 16, wherein said basic groups are a group comprising at least aliphatic and/or aromatic amino groups.

18. The method according to claim 17, wherein the basic group is a heterocycle having 5-6 ring members and 1-3 nitrogen atoms.

19. The method according to any of claims 13 to 18, in which the IR sensor (6) is used to measure bands having maxima at 2500-3500 cm⁻¹ and/or at 1400-2000 cm⁻¹.

20. The method according to claim 19, wherein C-H bands are measured.

## Revendications

1. Procédé pour le traitement de surface continu d'une bande métallique avec une formulation liquide (F), dans lequel une bande métallique est déplacée dans le sens longitudinal à travers un dispositif pour le traitement de surface de bandes métalliques, qui comprend au moins un dispositif (3) pour l'application de la formulation (F) et on applique la formulation (F) au moyen du dispositif (3) sur la bande métallique, en dimensionnant la quantité de formulation à appliquer de manière telle qu'il se forme une couche de traitement non métallique présentant une épaisseur de couche inférieure à 3 µm à la surface du métal, **caractérisé en ce que** le dispositif utilisé - considéré dans le sens de transport de la bande - est équipé en aval du dispositif (3) avec au moins un capteur d'IR (6) orienté vers le côté revêtu de la bande, travaillant en géométrie par réflexion, qui comporte
- au moins une source (9) d'IR émettant à large bande, ainsi que
- au moins un détecteur (10) d'IR à plusieurs canaux comprenant au moins deux canaux de mesure, où chacun des canaux de mesure est équipé d'un filtre (11) d'IR disposé devant ledit canal de mesure, qui n'est à chaque fois transparent que pour une plage de longueurs d'onde déterminée du rayonnement IR, à condition qu'au moins deux filtres d'IR différents soient utilisés,
et où la source (9) d'IR émet un rayonnement IR vers la surface de la bande à revêtir, le rayonnement est réfléchi partiellement par la surface de la bande, l'intensité du rayonnement réfléchi est mesurée avec le détecteur (10) d'IR à plusieurs canaux et on calcule à partir de la mesure d'intensité, au moyen d'une unité de calcul, l'épaisseur de la couche de traitement.

2. Procédé pour le traitement de surface continu d'une bande métallique avec une formulation liquide (F), dans lequel une bande métallique est déplacée dans le sens longitudinal à travers un dispositif pour le traitement de surface de bandes métalliques, qui comprend au moins
- un dispositif (3) pour l'application de la formulation (F) et
- un poste de séchage (5),
la formulation (F) comprenant au moins un solvant ainsi que des composants formant le revêtement, la formulation (F) étant appliquée sur la bande métallique au moyen du dispositif (3), le solvant étant éliminé au moins partiellement au moyen du poste de séchage et la quantité de la formulation à appliquer étant dimensionnée de manière telle qu'il se forme une couche de traitement non métallique non métallique présentant une épaisseur de couche à sec de moins de 3 µm à la surface du métal, **caractérisé en ce que** le dispositif utilisé - considéré dans le sens de transport de la bande - est équipé en aval du poste de séchage (5) avec au moins un capteur (6) d'IR orienté vers le côté revêtu de la bande, travaillant en géométrie par réflexion, qui comporte
- au moins une source (9) d'IR émettant à large bande, ainsi que
- au moins un détecteur (10) d'IR à plusieurs canaux comprenant au moins deux canaux de mesure, où chacun des canaux de mesure est équipé d'un filtre (11) d'IR disposé devant ledit canal de mesure, qui n'est à chaque fois transparent que pour une plage de longueurs d'onde déterminée du rayonnement IR, à condition qu'au moins deux filtres d'IR différents soient utilisés,
et où la source (9) d'IR émet un rayonnement IR vers la surface de la bande à revêtir, le rayonnement est réfléchi partiellement par la surface de la bande, l'intensité du rayonnement réfléchi est mesurée avec le détecteur (10) d'IR à plusieurs canaux et on calcule à partir de la mesure d'intensité, au moyen d'une unité de calcul, l'épaisseur de la couche de traitement.

3. Procédé selon la revendication 1 ou 2, **caractérisé en ce qu'**on utilise l'épaisseur de couche mesurée pour la commande de la quantité de formulation (F) à appliquer.

4. Procédé selon l'une quelconque des revendications 1 à 3, **caractérisé en ce qu'**il s'agit d'une unité de calcul interne au capteur.

5. Procédé selon l'une quelconque des revendications 1 à 4, **caractérisé en ce que** le capteur (6) d'IR comprend au moins deux sources (9) d'IR, qui entourent le détecteur de manière concentrique.

6. Procédé selon la revendication 5, **caractérisé en ce que** le capteur d'IR présente 4 à 10 sources (9) d'IR.

7. Procédé selon l'une quelconque des revendications 1 à 6, **caractérisé en ce que** le détecteur (10) d'IR à plusieurs canaux présente 2 à 4 canaux de mesure.

8. Procédé selon l'une quelconque des revendications 1 à 7, **caractérisé en ce que** le détecteur (10) d'IR à plusieurs canaux travaille dans la plage de 2000 à 5000 cm⁻¹.

9. Procédé selon l'une quelconque des revendications 1 à 8, **caractérisé en ce que** la bande métallique est logée sur le côté opposé au capteur d'IR de la bande métallique avec un rouleau d'appui ou (8), selon le cas, de déviation, qui n'est pas éloigné de plus de 4 m du site de la mesure d'IR.

10. Procédé selon l'une quelconque des revendications 1 à 9, **caractérisé en ce qu'**il s'agit, pour la bande métallique, d'une bande d'acier ou d'une bande d'acier zinguée.

11. Procédé selon la revendication 10, **caractérisé en ce qu'**il s'agit, pour le traitement de surface, d'une passivation.

12. Procédé selon la revendication 11, **caractérisé en ce qu'**il s'agit d'une passivation au phosphate, dans laquelle une formulation acide, aqueuse présentant un pH ≤ 5 est utilisée, qui contient, outre de l'eau, au moins de l'acide phosphorique et/ou du phosphate ainsi qu'au moins un ion métallique.

13. Procédé selon la revendication 11, **caractérisé en ce qu'**on utilise pour la passivation une formulation acide, aqueuse présentant un pH ≤ 5, qui contient, outre de l'eau, au moins un polymère soluble ou dispersible dans l'eau.

14. Procédé selon la revendication 13, **caractérisé en ce qu'**il s'agit, pour le polymère, d'au moins un polymère X soluble dans l'eau, comprenant des groupes acides.

15. Procédé selon la revendication 14, **caractérisé en ce qu'**il s'agit, pour les groupes acides, de groupes -COOH et/ou de sels de ceux-ci.

16. Procédé selon la revendication 13, **caractérisé en ce qu'**il s'agit, pour le polymère, d'un polymère Y soluble dans l'eau, comprenant des groupes basiques.

17. Procédé selon la revendication 16, **caractérisé en ce qu'**il s'agit, pour les groupes basiques, de groupes comprenant au moins des groupes amino aliphatiques et/ou aromatiques.

18. Procédé selon la revendication 17, **caractérisé en ce qu'**il s'agit, pour le groupe basique, d'un hétérocycle comprenant 5-6 chaînons de cycle et 1-3 atomes d'azote.

19. Procédé selon l'une quelconque des revendications 13 à 18, dans lequel on mesure, au moyen d'un capteur (6) d'IR des bandes présentant des maxima à 2500-3500 cm⁻¹ et/ou à 1400-2000 cm⁻¹.

20. Procédé selon la revendication 19, **caractérisé en ce qu'**on mesure des bandes C-H.
